# EUROPÄISCHE PATENTSCHRIFT

(11) **EP 3 593 338 B1**
(45) Veröffentlichungstag und Bekanntmachung des Hinweises auf die Patenterteilung: **07.04.2021**
(21) Anmeldenummer: 18710364.3
(22) Anmeldetag: 27.02.2018
(51) Int. Cl.: G08G 1/16, G01S 7/40, G01S 7/497

(54) **VERFAHREN ZUM DURCHFÜHREN DER KALIBRIERUNG EINES FAHRZEUG-SENSORSYSTEMS, INSBESONDERE EINES AUTONOMEN FAHRZEUGS, SOWIE FAHRZEUG-SENSORSYSTEM, INSBESONDERE AUTONOMES FAHRZEUG**
METHOD FOR CARRYING OUT THE CALIBRATION OF A VEHICLE SENSOR SYSTEM, IN PARTICULAR AN AUTONOMOUS VEHICLE, AND VEHICLE SENSOR SYSTEM, IN PARTICULAR AN AUTONOMOUS VEHICLE
PROCÉDÉ D'ÉTALONNAGE D'UN SYSTÈME DE CAPTEURS DE VÉHICULE, EN PARTICULIER D'UN VÉHICULE AUTONOME ET SYSTÈME DE CAPTEURS DE VÉHICULE, EN PARTICULIER D'UN VÉHICULE AUTONOME

(30) Priorität: 28.04.2017 DE 102017207233
(43) Veröffentlichungstag der Anmeldung: 15.01.2020
(73) Patentinhaber: Siemens Mobility GmbH, 81739 München (DE)
(72) Erfinder: EIDENBERGER, Robert, 81539 München (DE); WÖSCH, Thomas, 81241 München (DE)
(86) Internationale Anmeldenummer: PCT/EP2018/054756
(87) Internationale Veröffentlichungsnummer: WO 2018/197077

(56) Entgegenhaltungen:
- US-B1- 8 520 695

## Beschreibung

Die Erfindung bezieht sich auf ein Verfahren zum Durchführen der Kalibrierung eines Fahrzeug-Sensorsystems, insbesondere eines Autonomen Fahrzeugs, gemäß dem Oberbegriff des Patentanspruches 1 und ein Fahrzeug-Sensorsystem, insbesondere ein Autonomes Fahrzeug, gemäß dem Oberbegriff des Patentanspruches 7.

Ein Fahrzeug-Sensorsystem ist ein hierarchisch strukturiertes System in einem Fahrzeug als mobiles Verkehrsmittel zum Transport von Personen und Gegenständen mit einer Vielzahl von Sensoren gleichen oder unterschiedlichen Typs auf verschiedenen Ebenen des Fahrzeugs und einer nachgeschalteten mikroelektronischen Verarbeitungseinheit. In einem solchen Sensorsystem findet zum Zeitpunkt einer Messung eine Wirkungsübertragung statt, an der Sensor, Messobjekt und Umwelt beteiligt sind.

Derartige Sensorsysteme sind integraler Bestandteil von z.B. Fahrzeugen mit Fahrzeugassistenzsystemen und Autonomen Fahrzeugen für die Umsetzung von Autonomen Fahren. In einem solchen fahrzeugsensorsystemspezifischen Szenario spielen Kalibrierung und Diagnose eine entscheidende Rolle.

Die Kalibrierung beinhaltet gemäß DIN 1319 Teil 1, Ausgabe Januar 1995 mit dem Titel: "Grundlagen der Messtechnik" - Grundbegriffe - Herausgeber: DIN Deutsches Institut für Normung e.V. Beuth-Verlag GmbH, Berlin-Wien-Zürich "das Ermitteln des Zusammenhangs zwischen Messwert oder Erwartungswert der Ausgangsgröße und dem zugehörigen wahren oder richtigen Wert der als Eingangsgröße vorliegenden Messgröße für eine betrachtete Messeinrichtung bei vorgegebenen Bedingungen". Bei der Kalibrierung erfolgt kein Eingriff, der das Messgerät verändert.

Bei der Diagnose wird ermittelt, ob alle Sensorsystemkomponenten fehlerfrei arbeiten, um einen ordnungsgemäßen Betrieb zu garantieren. Insbesondere durch eine permanente Selbstdiagnose lässt sich die Verlässlichkeit von Sensorsystemen stark verbessern und die Notwendigkeit zur wiederkehrenden Prüfung, z.B. durch Kalibrieren, deutlich reduzieren.

Autonome Fahrzeuge, wie z.B. ein klassisches fahrerloses Transportfahrzeug (FTF), sind in der Regel mit einer Vielzahl von Sensoren in Sensoriken ausgestattet, um den autonomen Betrieb zu gewährleisten (z.B. 3D Sensor, Radar, Kamera, Ultraschall). Ausgehend von der naturwissenschaftlichen Definition des Begriffs "Sensorik" als "Wissenschaft zum Einsatz der menschlichen Sinne zum Zwecke von Untersuchungen und zur Erhebung von Messwerten" ist die Sensorik die Wissenschaft und die Anwendung von Sensoren zur Messung und Kontrolle von Veränderungen von umweltbezogenen, biologischen oder technischen Systemen, wie z.B. von Autonomen Fahrzeugen.

So ist beispielsweise zur Navigation solcher Autonomer Fahrzeuge eine Sensorik mit einer Vielzahl von Sensoren verbaut (z.B. Laserscanner und Encoder zum Ermitteln des Fahrwegs).

Um den Kalibieraufwand von Fahrzeug-Sensorsystemen, insbesondere Autonomen Fahrzeugen, gering zu halten, führen diese eine Selbstkalibrierung durch.

Besonders in Anlagen - in sogenannten System- oder Fahrzeugflotten, in denen mehrere Fahrzeug-Sensorsysteme oder Autonome Fahrzeuge, betrieben werden, ist eine selbständige Kalibrierung der Fahrzeug-Sensorsysteme bzw. der Autonomen Fahrzeuge, wünschenswert.

Aus der US 8,520,695 B1 sind eine Vorrichtung und ein Verfahren in einem Fahrzeugkommunikationssystem mit einer Fahrzeug-zu-Fahrzeug-Kommunikation (V2V-Kommunikation gemäß Figur 5) zur drahtlosen Übertragung von Nachrichten mit Fahrzeugpositionsinformationen bekannt, die Fahrzeugpositionsinformationen, Fahrzeugbewegungsrichtungen und Fahrzeuggeschwindigkeiten von Fahrzeugen oder eines anderen sich bewegenden Objekten enthalten und wobei die Übertragung in regelmäßigen Abständen in einem vorübergehend festen Zeitschlitz innerhalb eines vorgegebenen Grundzeitintervalls wiederholt wird. In einer bevorzugten Ausführungsform entspricht die Nachrichtenübertragungsdauer entweder einer vorbestimmte Zeitschlitzdauer oder sie ist kleiner als die Zeitschlitzdauer. Gemäß weiterer Ausführungsformen wird im Allgemeinen derselbe Zeitschlitz für eine zusammenhängende Folge grundlegender Zeitintervalle verwendet. Dabei werden Algorithmen beschrieben, die drahtlose Störungen innerhalb eines Zeitfensters beheben. Gemäß weitergehender Ausführungsformen wird das grundlegende Zeitintervall in mehrere Zeiträume auf Regionen von verschiedenen Nachrichtenklassen aufgeteilt, bei denen verschiedene drahtlose Bandbreitenzuweisungsalgorithmen für die Klassenregionen verwendet werden.

Die der Erfindung zugrundeliegende Aufgabe besteht darin, ein Verfahren zum Durchführen der Kalibrierung eines Fahrzeug-Sensorsystems, insbesondere eines Autonomen Fahrzeugs, sowie ein Fahrzeug-Sensorsystem, insbesondere ein Autonomes Fahrzeug, anzugeben, mit dem auf einfache Art und Weise ohne großen Zusatzaufwand eine Selbstkalibrierung durchgeführt werden kann.

Diese Aufgabe wird ausgehend von dem im Oberbegriff des Patentanspruchs 1 definierten Kalibrierverfahren durch die im Kennzeichen des Patentanspruches 1 angegebenen Merkmale gelöst.

Weiterhin wird die Aufgabe ausgehend von dem im Oberbegriff des Patentanspruchs 7 definierten Fahrzeug-Sensorsystem durch die im Kennzeichen des Patentanspruches 7 angegebenen Merkmale gelöst.

Die der Erfindung zugrundeliegende Idee gemäß der in den Ansprüchen 1 und 7 jeweils angegebenen technischen Lehre besteht darin, dass im Zuge der Selbstkalibrierung eines Fahrzeug-Sensorsystems FSES_{A}, insbesondere eines Autonomen Fahrzeugs, dieses Fahrzeug-Sensorsystem FSES_{A} und ein kalibriertes Fahrzeug-Sensorsystem FSES_{B} sich gegenseitig beobachten, dabei Sensorik-basiert jeweils mindestens ein extrahiertes Systemmerkmal erfassen sowie in Abhängigkeit von sensorikbezogenen, extrinsischen und intrinsischen Systemparametern und der erfassten Systemmerkmale unabhängig voneinander durch homogene Transformation [Tₕ] "6D-Systempose [FSES_{A_}T_{h_}FSES_{B}], [FSES_{A_}T_{h_}FSES_{B}]*, [FSES_{B_}T_{h_}FSES_{A}], [FSES_{B_}T_{h_}FSES_{A}]*"-basierte Relativinformationen erzeugen, die vorzugsweise durch die gesamten Systemparameter/Systemmerkmale oder einer Teilmenge hiervon von dem jeweiligen Fahrzeug-Sensorsystem gebildet werden. Danach vergleicht das Fahrzeug-Sensorsystem FSES_{A} die selbst erzeugte Relativinformationen mit der von dem kalibrierten Fahrzeug-Sensorsystem FSES_{B} erzeugten und übermittelten Relativinformationen. Bei Feststellung der Identität (bei identisch beobachteten Informationen) ist das Fahrzeug-Sensorsystem ( FSES_{A} kalibriert, anderenfalls werden durch Änderung der Systemparameter des Fahrzeug-Sensorsystems FSES_{A}, vorzugsweise infolge einer Optimierungsprozedur in dem Fahrzeug-Sensorsystem FSES_{A}, angepasste zweite Relativinformationen benutzt, die von dem kalibrierten Fahrzeug-Sensorsystem FSES_{B} auf der Basis einer gleichfalls angepassten, das Fahrzeug-Sensorsystem FSES_{A} spezifizierenden 6D-Systempose [FSES_{B_}T_{h_}FSES_{A}]*' erzeugbar sind, und die angepassten zweiten Relativinformationen als neue zweite Relativinformationen mit den ersten Relativinformationen für einen 6D-Systemposen-Identitätscheck verglichen.

Die Vorteile einer derartig durchgeführten Selbstkalibrierung sind:
- Einfache Durchführung durch gezielte Auswahl unkalibrierter Fahrzeug-Sensorsysteme.
- Minimierung des Kalibrierungsaufwands für eine Fahrzeug- bzw. Systemflotte.
- Dauerhafte Durchführung der Selbstkalibrierung möglich.
- Selbstkalibrierung ist im Normalbetrieb integrierbar.
- Selbstkalibrierung ist an beliebigen Stellen durchführbar.
- Umgebungsunabhängige Selbstkalibrierung.

Die Identität der durch die homogene Transformation [Tₕ] beschriebenen und charakterisierten 6D-Systemposen [FSES_{A_}T_{h_}FSES_{B}] und [FSES_{B_}T_{h_}FSES_{A}] wird mittels einer Transformationsmatrizen-Multiplikation nach der Maßgabe, [FSES_{A_}T_{h_}FSES_{B}] x [FSES_{B_}T_{h_}FSES_{A}] = [E] mit "[E]" als Einheitsmatrix, festgestellt und
die Nicht-Identität der durch die homogene Transformation [Tₕ] beschriebenen und charakterisierten 6D-Systemposen [FSES_{A_}T_{h_}FSES_{B}]* und [FSES_{B_}T_{h_}FSES_{A}]* wird mittels einer Transformationsmatrizen-Multiplikation nach der Maßgabe, [FSES_{A_}T_{h_}FSES_{B}] * x [FSES_{B_}T_{h_}FSES_{A}] * ≠ [E] mit "[E]" als Einheitsmatrix, festgestellt.

Bei der Betrachtung von zwei Fahrzeug-Sensorsystemem, insbesondere von zwei Autonomen Fahrzeugen, von denen eines kalibriert ist und das andere unkalibriert, kann mit dem kalibrierten Fahrzeug-Sensorsystem, wie vorstehend skizziert und in den Patentansprüchen 1 und 7 angegeben, das unkalibrierte Fahrzeug-Sensorsystem kalibriert werden.

Um hierfür einen Vergleich der Systemmerkmale und letztlich der Relativinformationen durchführen zu können, werden an dem jeweiligen Fahrzeug-Sensorsystem vorzugsweise Merkmale extrahiert. Diese Merkmale sind derart gestaltet, dass diese vom jeweiligen Sensorsystem robust und zuverlässig erkannt werden können.

In einer vorzugsweisen Ausführungsform werden vorhandene natürliche Merkmale des Fahrzeug-Sensorsystems segmentiert. Zur Steigerung der Robustheit können zu diesen natürlichen Merkmalen noch spezielle Merkmale hinzugefügt werden, so z.B. Reflektor-Marken für als Sensor verwendete Laserscanner.

Zur Steigerung der Robustheit des Ergebnisses findet die Auswertung der Systemmerkmale und letztlich die Erzeugung der Relativinformationen zur Kalibrierung des Fahrzeug-Sensorsystems wiederholt an verschiedenen Orten, wo sich beide Fahrzeug-Sensorsysteme bzw. Autonome Fahrzeuge gemeinsam in Sicht- oder Sensorreichweite begegnen statt. Für spurgebundene (z.B. schienenbasierte) Fahrzeug-Sensorsysteme findet eine solche Auswertung beispielsweise während der Fahrt (beide Fahrzeug-Sensorsysteme bzw. Autonome Fahrzeuge fahren aneinander vorbei) oder in Bahnhöfen (beide Fahrzeug-Sensorsysteme bzw. Autonome Fahrzeuge stehen sich gegenüber oder ein Fahrzeug-Sensorsystem bzw. Autonome Fahrzeuge ist in Bewegung und passiert das andere) statt. In analoger Weise kann dies auch für nicht spurgebundene Fahrzeug-Sensorsysteme bzw. Autonome Fahrzeuge, wie z.B. Straßenfahrzeug-Sensorsysteme bzw. Autonome Straßenfahrzeuge, stattfinden.

Die Übermittlung der Relativinformationen erfolgt vorzugsweise durch gegenseitigen Austausch z.B. durch direkte Kommunikation zwischen den Fahrzeug-Sensorsystemen oder durch indirekte Kommunikation der Fahrzeug-Sensorsysteme über eine übergeordnete Leitzentrale. Eine solche Leitzentrale ist üblicherweise dann vorhanden, wenn die Fahrzeug-Sensorsysteme bzw. Autonomen Fahrzeuge zu einer System- oder Fahrzeugflotte gehören. Dies ist z.B. im Schienen- oder Bahnverkehr der Fall, wenn z.B. mehrere Fahrzeuge (Schienen- oder Bahnfahrzeuge) eines Bahn- oder Schienennetzbetreibers (z.B. die Deutsche Bahn) zumindest zeitweise in Kontakt mit einer Leitzentrale des Bahn- oder Schienennetzbetreibers stehen.

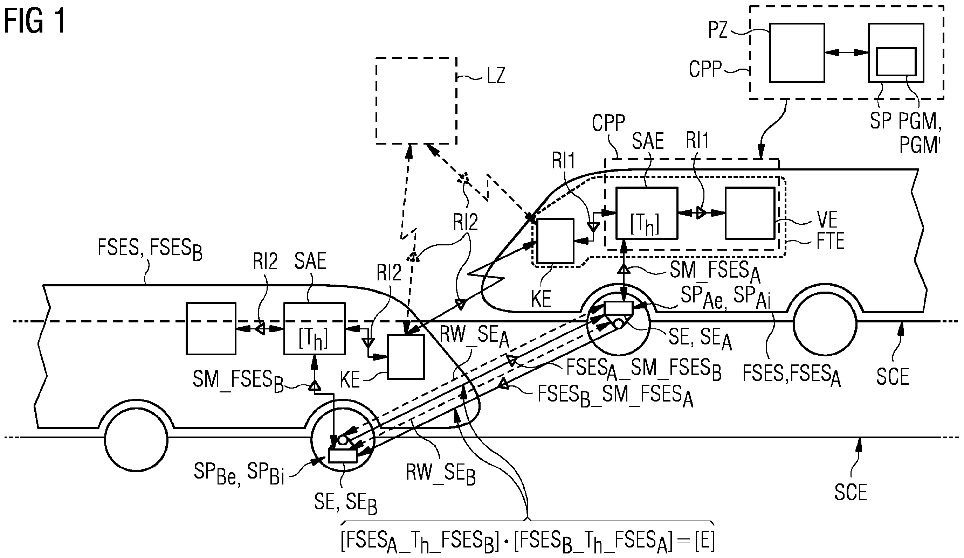

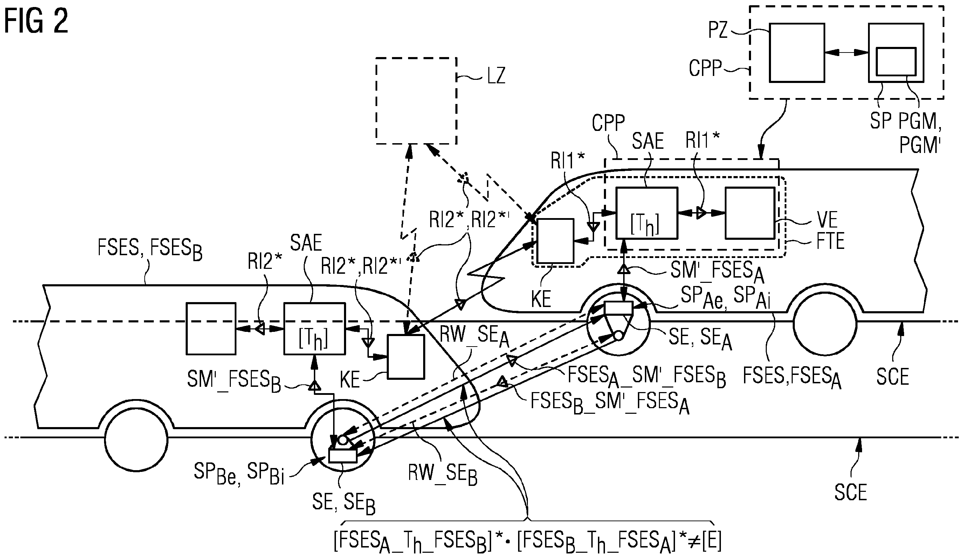

Weitere Vorteile der Erfindung ergeben sich aus der nachfolgenden Beschreibung eines Ausführungsbeispiels der Erfindung anhand der FIGUREN 1 und 2. Diese zeigen:
FIGUR 1 Anordnung von Fahrzeug-Sensorsystemen, insbesondere Autonomen Fahrzeugen, zum Durchführen einer Selbstkalibrierung mit dem Ergebnis, dass das jeweilige Fahrzeug-Sensorsystem bzw. Autonome Fahrzeug kalibriert ist,
FIGUR 2 Anordnung von Fahrzeug-Sensorsystemen, insbesondere Autonomen Fahrzeugen, zum Durchführen einer Selbstkalibrierung mit dem Ergebnis, dass das jeweilige Fahrzeug-Sensorsystem bzw. Autonome Fahrzeug durch Anpassung von Systemparametern solange verändert wird bis das jeweilige Fahrzeug-Sensorsystem bzw. Autonome Fahrzeug gemäß der FIGUR 1 kalibriert ist.
FIGUR 1 zeigt ein unkalibriertes Fahrzeug-Sensorsystem FSES_{A} mit einer mindestens einen Sensor enthaltenden Sensorik SE_{A} zur Erfassung von Systemmerkmalen, das mit einem kalibrierten Fahrzeug-Sensorsystem FSES_{B} anderer kalibrierter Fahrzeug-Sensorsysteme FSES mit anderen Sensoriken SE zur Erfassung von Systemmerkmalen eine Fahrzeug-Sensorsystem-Anordnung zum Durchführen einer Selbstkalibrierung bildet.

Zu diesem Zweck ist die Sensorik SE_{A} des Fahrzeug-Sensorsystems FSES_{A} mit den anderen Sensoriken SE der anderen kalibrierten Fahrzeug-Sensorsysteme FSES entweder vergleichbar oder unterschiedlich, aber jeweils in Bezug auf das zu erfassende Systemmerkmal vergleichbar. Dieses trifft auch für eine weitere, zu den anderen Sensoriken SE gehörende Sensorik SE_{B} des kalibrierten Fahrzeug-Sensorsystems FSES_{B} zur Erfassung von Systemmerkmalen zu, die wie die Sensorik SE_{A} mindestens einen Sensor enthält.

Bei den beiden Fahrzeug-Sensorsystemen FSES_{A}, FSES_{B} handelt es sich um in Fahrzeuge enthaltene Sensorsysteme, wobei das Fahrzeug von Gattung her beliebig sein kann, z.B. ein spurgebundenes Fahrzeug in Gestalt eines Schienenfahrzeugs oder aber ein spurungebundenes Fahrzeug in Gestalt eines Kraftfahrzeugs, und das Fahrzeug-Sensorsystem als solches in einem Fahrassistenzsystem oder als Autonomes Fahrzeug z.B. in Bezug auf die angegebenen Fahrzeuggattungen realisiert sein kann.

Die beiden in der FIGUR 1 dargestellten Fahrzeug-Sensorsysteme FSES_{A}, FSES_{B} sind zwei sich auf Schienen SCE aufeinander zu bewegende Schienenfahrzeug-Sensorsysteme, die z.B. als Autonome Schienenfahrzeuge ausgebildet sein können.

Mit der Sensorik SE_{A} des Fahrzeug-Sensorsystems FSES_{A} kann mindestens ein extrahiertes Systemmerkmal SM_{_}FSES_{A} erfasst werden, wobei die Extrahierung z.B. durch Segmentierung natürlicher Merkmale des Fahrzeug-Sensorsystems FSES_{A} oder durch Hinzufügen spezieller künstlicher Merkmale zu natürlichen Merkmalen des Fahrzeug-Sensorsystems FSES_{A}, z.B. Reflektor-Marken für Laserscanner, erreicht werden kann.

In gleicher Weise kann mit der weiteren Sensorik SE_{B} des kalibrierten Fahrzeug-Sensorsystems FSES_{B} mindestens ein extrahiertes Systemmerkmal SM_{_}FSES_{B} erfasst werden, wobei die Extrahierung wieder z.B. durch Segmentierung natürlicher Merkmale des kalibrierten Fahrzeug-Sensorsystems FSES_{B} oder durch Hinzufügen spezieller künstlicher Merkmale zu natürlichen Merkmalen des kalibrierten Fahrzeug-Sensorsystems FSES_{B}, z.B. Reflektor-Marken für Laserscanner, erreicht werden kann.

Neben der Sensorik SE_{A} weist das Fahrzeug-Sensorsysteme FSES_{A} eine Steuer- und Auswerteeinheit SAE auf. Sowohl die Steuer- und Auswerteeinheit SAE als auch die Sensorik SE_{A} sind miteinander verbunden und im Hinblick auf das allgemein bekannte Prinzip einer Koordinatentransformation durch homogene Transformation [Tₕ], bei der Position und Orientierung der Objekte des Fahrzeug-Sensorsystems FSES_{A} sowohl in dem Fahrzeug-Sensorsystem FSES_{A} untereinander (intrinsisch) als auch zum Weltkoordinatensystem (extrinsisch) beschrieben werden, derart ausgebildet, dass in Bezug auf die Sensorik SE_{A} intrinsische Systemparameter SP_{Ai} und extrinsische Systemparameter SP_{Ae} angegeben werden können und in Abhängigkeit der Systemparameter SP_{Ai}, SP_{Ae} und des Systemmerkmals SM_{_}FSES_{A} durch die homogene Transformation [Tₕ] eine 6D-Systempose [T_{h_}FSES_{A}] beschrieben und charakterisiert werden kann.

Das Gleiche ist in dem kalibrierten Fahrzeug-Sensorsystem FSES_{B} mit der weiteren Sensorik SE_{B} möglich, wenn die Steuer- und Auswerteeinheit SAE und die Sensorik SE_{B} miteinander verbunden und im Hinblick auf das allgemein bekannte Prinzip einer Koordinatentransformation durch die homogene Transformation [Tₕ], bei der Position und Orientierung der Objekte des Fahrzeug-Sensorsystems FSES_{B} sowohl in dem Fahrzeug-Sensorsystem FSES_{B} untereinander (intrinsisch) als auch zum Weltkoordinatensystem (extrinsisch) beschrieben werden, derart ausgebildet sind, dass in Bezug auf die Sensorik SE_{B} intrinsische Systemparameter SP_{Bi} und extrinsische Systemparameter SP_{Be} angegeben werden können und in Abhängigkeit der Systemparameter SP_{Bi}, SP_{Be} und des Systemmerkmals SM_FSES_{B} durch die homogene Transformation [Tₕ] eine 6D-Systempose [T_{h_}FSES_{B}] beschrieben und charakterisiert werden kann.

Für das Durchführen der Selbstkalibrierung sind die Sensoriken SE_{A}, SE_{B} und die Steuer- und Auswerteeinheiten SAE in den Fahrzeug-Sensorsystemen FSES_{A}, FSES_{B} nun wie folgt ausgebildet:
Die Sensorik SE_{A} in dem Fahrzeug-Sensorsystem FSES_{A} erfasst von dem kalibrierten Fahrzeug-Sensorsystem FSES_{B}, wobei dieses in einer durch die Sensorik SE_{A} vorgegebenen Reichweite RW_{_}SE_{A}, die sich vorzugsweise an die Sichtweite orientiert, von dem Fahrzeug-Sensorsystemen FSES_{A} entfernt ist, in Bezug auf die Systemparameter SP_{Ae}, SP_{Ai} mindestens ein extrahiertes erstes Systemmerkmal FSES_{A_}SM_{_}FSES_{B}. Die Extrahierung wird dabei wieder z.B. durch Segmentierung natürlicher Merkmale des kalibrierten Fahrzeug-Sensorsystems FSES_{B} oder durch Hinzufügen spezieller künstlicher Merkmale zu natürlichen Merkmalen des kalibrierten Fahrzeug-Sensorsystems FSES_{B}, z.B. Reflektor-Marken für Laserscanner, erreicht.

Im Gegenzug wird durch die weitere Sensorik SE_{B} in dem kalibrierten Fahrzeug-Sensorsystem FSES_{B} von dem Fahrzeug-Sensorsystem FSES_{A}, wobei dieses in einer durch die Sensorik SE_{B} vorgegebenen weiteren Reichweite RW_{_}SE_{B}, die sich wieder vorzugsweise an die Sichtweite orientiert, von dem kalibrierten Fahrzeug-Sensorsystemen FSES_{B} entfernt ist, in Bezug auf die Systemparameter SP_{Be}, SP_{Bi} mindestens ein extrahiertes zweites Systemmerkmal FSES_{B_}SM_{_}FSES_{A} erfasst. Die Extrahierung wird auch hier wieder z.B. durch Segmentierung natürlicher Merkmale des Fahrzeug-Sensorsystems FSES_{A} oder durch Hinzufügen spezieller künstlicher Merkmale zu natürlichen Merkmalen des Fahrzeug-Sensorsystems FSES_{A}, z.B. Reflektor-Marken für Laserscanner, erreicht. Die weitere Reichweite RW_{_}SE_{B} ist vorzugsweise mit der Reichweite RW_{_}SE_{A} im Wesentlichen identisch. Dies bedeutet, dass die beiden Fahrzeug-Sensorsysteme FSES_{A}, FSES_{B} zwar an jeweils voneinander entfernten Orten aber im Wesentlichen gleichzeitig die jeweiligen Systemmerkmale erfassen. Die Einschränkung "im Wesentlichen" ist notwendig, weil die beiden Fahrzeug-Sensorsysteme FSES_{A}, FSES_{B} die Systemmerkmale erfassen können, wenn sie sich relativ zueinander bewegen, also zumindest teilweise im Fahrtzustand sind (die Reichweiten können hier aufgrund der Bewegung/Relativbewegung nicht absolut identisch sein) oder aber sich nicht fortbewegen, also im Ruhezustand sind (hier sind die Reichweiten identisch). Es ist alternativ aber auch möglich, dass die beiden Fahrzeug-Sensorsysteme FSES_{A}, FSES_{B} wieder an jeweils voneinander entfernten Orten aber zu unterschiedlichen Zeitpunkten die jeweiligen Systemmerkmale erfassen.

Die mit der Sensorik SE_{A} verbundene Steuer- und Auswerteeinheit SAE in dem Fahrzeug-Sensorsystem FSES_{A} beschreibt und charakterisiert, z.B. mittels Berechnung, in Abhängigkeit der Systemparameter SP_{Ae}, SP_{Ai} und des ersten Systemmerkmals FSES_{A_}SM_{_}FSES_{B} durch die homogene Transformation [Tₕ] eine das kalibrierte Fahrzeug-Sensorsystem FSES_{B} spezifizierende 6D-Systempose [FSES_{A_}T_{h_}FSES_{B}] und erzeugt dann auf der Basis der das kalibrierte Fahrzeug-Sensorsystem FSES_{B} spezifizierenden 6D-Systempose [FSES_{A_}T_{h_}FSES_{B}] erste Relativinformationen RI1.

In dem kalibrierten Fahrzeug-Sensorsystem FSES_{B} werden von der mit der weiteren Sensorik SE_{B} verbundenen Steuer- und Auswerteeinheit SAE in Abhängigkeit der Systemparameter SP_{Be}, SP_{Bi} und des zweiten Systemmerkmals FSES_{B_}SM_{_}FSES_{A} durch die homogene Transformation [Tₕ] eine das Fahrzeug-Sensorsystem FSES_{A} spezifizierende 6D-Systempose [FSES_{B_}T_{h_}FSES_{A}], z.B. mittels Berechnung, beschrieben und charakterisiert und dann auf der Basis der das Fahrzeug-Sensorsystem FSES_{A} spezifizierenden 6D-Systempose [FSES_{B_}T_{h_}FSES_{A}] zweite Relativinformationen RI2 erzeugt.

Die in den Fahrzeug-Sensorsystemen FSES_{A}, FSES_{B} erzeugten Relativinformationen RI1, RI2 werden nun ausgetauscht, d.h. das kalibrierte Fahrzeug-Sensorsystem FSES_{B} überträgt die zweiten Relativinformationen RI2 an das Fahrzeug-Sensorsystem FSES_{A} und die erste Relativinformationen RI1 werden im Gegenzug von dem Fahrzeug-Sensorsystem FSES_{A} an das kalibrierte Fahrzeug-Sensorsystem FSES_{B} übertragen. Für diese Übertragung enthalten beide Fahrzeug-Sensorsysteme FSES_{A}, FSES_{B} eine Kommunikationseinheit KE, die als Sende-/Empfangseinrichtung ausgebildet ist. Das bedeutet, dass die zweiten Relativinformationen RI2 durch das kalibrierte Fahrzeug-Sensorsystem FSES_{B} gesendet und von dem Fahrzeug-Sensorsystem FSES_{A} empfangen. Gleiches passiert mit vertauschten Rollen mit den ersten Relativinformationen RI1. Die Relativinformationen RI1, RI2 werden dabei vorzugsweise mittels direkter Kommunikation zwischen den Kommunikationseinheiten KE der beiden Fahrzeug-Sensorsystemen FSES_{A}, FSES_{B} übermittelt. Alternativ ist es aber auch möglich, dass die Relativinformationen RI1, RI2 durch indirekte Kommunikation, z.B. über eine den Fahrzeug-Sensorsystemen FSES_{A}, FSES_{B} zugeordnete Leitzentrale LZ übermittelt werden.

In der FIGUR 1 ist die Übermittlung der Relativinformationen RI1, RI2 nur für die zweiten Relativinformationen RI2 dargestellt, weil die für die Durchführung der Selbstkalibrierung abschließende Weiterverarbeitung der Relativinformationen RI1, RI2 nur für das Fahrzeug-Sensorsystem FSES_{A} in all seinen Facetten mit den dafür vorgesehenen Einheiten bzw. Komponenten dargestellt ist und weil dieses Fahrzeug-Sensorsystem FSES_{A} ja über das das kalibrierte Fahrzeug-Sensorsystem FSES_{B} kalibriert werden soll.

Die für die Durchführung der Selbstkalibrierung abschließende Weiterverarbeitung der Relativinformationen RI1, RI2 erfolgt in dem Fahrzeug-Sensorsystem FSES_{A} in einer Funktionseinheit FTE, die gemeinsam gebildet wird aus der Steuer- und Auswerteeinheit SAE, der Kommunikationseinheit KE und einer Vergleichseinheit VE, wobei die Kommunikationseinheit KE und die Vergleichseinheit VE mit der Steuer- und Auswerteeinheit SAE verbunden sind. Diese Funktionseinheit FTE ist derart ausgebildet, dass die in der Kommunikationseinheit KE empfangenen zweiten Relativinformationen RI2 über den Weg der Steuer- und Auswerteeinheit SAE in die Vergleichseinheit VE und die in der Steuer- und Auswerteeinheit SAE erzeugten ersten Relativinformationen RI1 in die Vergleichseinheit VE gelangen und die Vergleichseinheit VE die ersten Relativinformationen RI1 mit den zweiten Relativinformationen RI2 vergleicht, so dass, wenn die in den ersten Relativinformationen RI1 enthaltene, das kalibrierte Fahrzeug-Sensorsystem FSES_{B} spezifizierende 6D-Systempose [FSES_{A_}T_{h_}FSES_{B}] und die in den zweiten Relativinformationen RI2 enthaltene, das Fahrzeug-Sensorsystem FSES_{A} spezifizierende 6D-Systempose [FSES_{B_}T_{h_}FSES_{A}] identisch sind, das Fahrzeug-Sensorsystem FSES_{A} kalibriert ist, anderenfalls wird die Durchführung der Selbstkalibrierung des Fahrzeug-Sensorsystems FSES_{A} fortgesetzt. Was hierbei gemacht wird und wie und wo diese fortgeführt wird, wird nachfolgend im Zusammenhang mit der Beschreibung von FIGUR 2 erläutert.

Der Identitätscheck bzw. Identitätsvergleich wird ebenfalls von der gemeinsamem Funktionseinheit FTE geleistet, bei der die Vergleichseinheit VE und die Steuer- und Auswerteeinheit SAE hierfür derart ausgebildet sind, dass die durch die homogene Transformation [Tₕ] beschriebenen und charakterisierten 6D-Systemposen [FSES_{A_}T_{h_}FSES_{B}] und [FSES_{B_}T_{h_}FSES_{A}] Transformationsmatrizen-basiert multipliziert werden. Gemäß der Darstellung in der FIGUR 1 liefert diese Multiplikationsoperation ein Ergebnis nach der Maßgabe, [FSES_{A_}T_{h_}FSES_{B}] x [FSES_{B_}T_{h_}FSES_{A}] = [E] mit "[E]" als Einheitsmatrix. Dieses Ergebnis sagt aus, dass die das kalibrierte Fahrzeug-Sensorsystem FSES_{B} spezifizierende 6D-Systempose [FSES_{A_}T_{h_}FSES_{B}] und die das Fahrzeug-Sensorsystem FSES_{A} spezifizierende 6D-Systempose [FSES_{B_}T_{h_}FSES_{A}] identisch sind.

Dieses bedeutet letztlich, dass die Sensorik SE_{A} des Fahrzeug-Sensorsystems FSES_{A} und somit das Fahrzeug-Sensorsystem FSES_{A} kalibriert ist.

Die Vergleichseinheit VE und die Steuer- und Auswerteeinheit SAE bilden vorzugsweise eine weitere Funktionseinheit zum Durchführen der homogenen Transformation und des Identitätsvergleichs, die als Computer-Programm-Produkt CPP, also softwaremäßig, ausgebildet ist, das einen nicht-flüchtigen, lesbaren Speicher SP, in dem prozessor-lesbare Steuerprogrammbefehle eines die homogene Transformation und den Identitätsvergleich durchführenden Programm-Moduls PGM gespeichert sind, und einen mit dem Speicher SP verbundenen Prozessor PZ, der die Steuerprogrammbefehle des Programm-Moduls PGM zur Durchführung der homogenen Transformation und des Identitätsvergleichs ausführt, enthält.

Die softwaremäßig Ausbildung des Computer-Programm-Produkts CPP kann sogar so weit gehen, dass in dem nicht-flüchtigen, lesbaren Speicher SP prozessor-lesbare Steuerprogrammbefehle eines auf die Durchführung eines Verfahrens zum Durchführen der Selbstkalibrierung des Fahrzeug-Sensorsystems FSES_{A}, insbesondere des Autonomen Fahrzeugs, ausgedehnten Programm-Moduls PGM' gespeichert sind und in dem mit dem Speicher SP verbundenen Prozessor PZ die Steuerprogrammbefehle des Programm-Moduls PGM' zur Verfahrensdurchführung ausgeführt werden.

FIGUR 2 zeigt das unkalibrierte Fahrzeug-Sensorsystem FSES_{A} mit der mindestens einen Sensor enthaltenden Sensorik SE_{A} zur Erfassung von Systemmerkmalen, das mit dem kalibrierten Fahrzeug-Sensorsystem FSES_{B} der anderen Fahrzeug-Sensorsystemen FSES mit den anderen Sensoriken SE zur Erfassung von Systemmerkmalen die Fahrzeug-Sensorsystem-Anordnung zum Durchführen einer Selbstkalibrierung bildet. Zu diesem Zweck ist die Sensorik SE_{A} des Fahrzeug-Sensorsystems FSES_{A} mit den anderen Sensoriken SE der anderen kalibrierten Fahrzeug-Sensorsysteme FSES entweder vergleichbar oder unterschiedlich, aber jeweils in Bezug auf das zu erfassende Systemmerkmal vergleichbar. Dieses trifft auch für die weitere, zu den anderen Sensoriken SE gehörende Sensorik SE_{B} des kalibrierten Fahrzeug-Sensorsystems FSES_{B} zur Erfassung von Systemmerkmalen zu, die wie die Sensorik SE_{A} mindestens einen Sensor enthält.

Bei den beiden Fahrzeug-Sensorsystemen FSES_{A}, FSES_{B} handelt es sich um in Fahrzeuge enthaltene Sensorsysteme, wobei das Fahrzeug von Gattung her beliebig sein kann, z.B. ein spurgebundenes Fahrzeug in Gestalt eines Schienenfahrzeugs oder aber ein spurungebundenes Fahrzeug in Gestalt eines Kraftfahrzeugs, und das Fahrzeug-Sensorsystem als solches in einem Fahrassistenzsystem oder als Autonomes Fahrzeug z.B. in Bezug auf die angegebenen Fahrzeuggattungen realisiert sein kann.

Die beiden in der FIGUR 2 dargestellten Fahrzeug-Sensorsysteme FSES_{A}, FSES_{B} sind wieder die zwei sich auf den Schienen SCE aufeinander zu bewegenden Schienenfahrzeug-Sensorsysteme, die z.B. als die Autonomen Schienenfahrzeuge ausgebildet sein können.

Mit der Sensorik SE_{A} des Fahrzeug-Sensorsystems FSES_{A} kann mindestens ein extrahiertes modifiziertes Systemmerkmal SM'_{_}FSES_{A} erfasst werden, wobei die Extrahierung z.B. durch Segmentierung natürlicher Merkmale des Fahrzeug-Sensorsystems FSES_{A} oder durch Hinzufügen spezieller künstlicher Merkmale zu natürlichen Merkmalen des Fahrzeug-Sensorsystems FSES_{A}, z.B. Reflektor-Marken für Laserscanner, erreicht werden kann.

In gleicher Weise kann mit der weiteren Sensorik SE_{B} des kalibrierten Fahrzeug-Sensorsystems FSES_{B} mindestens ein extrahiertes modifiziertes Systemmerkmal SM'_{_}FSES_{B} erfasst werden, wobei die Extrahierung wieder z.B. durch Segmentierung natürlicher Merkmale des kalibrierten Fahrzeug-Sensorsystems FSES_{B} oder durch Hinzufügen spezieller künstlicher Merkmale zu natürlichen Merkmalen des kalibrierten Fahrzeug-Sensorsystems FSES_{B}, z.B. Reflektor-Marken für Laserscanner, erreicht werden kann.

Neben der Sensorik SE_{A} weist das Fahrzeug-Sensorsysteme FSES_{A} die Steuer- und Auswerteeinheit SAE auf. Sowohl die Steuer- und Auswerteeinheit SAE als auch die Sensorik SE_{A} sind miteinander verbunden und im Hinblick auf das allgemein bekannte Prinzip der Koordinatentransformation durch die homogene Transformation [Tₕ], bei der Position und Orientierung der Objekte des Fahrzeug-Sensorsystems FSES_{A} sowohl in dem Fahrzeug-Sensorsystem FSES_{A} untereinander (intrinsisch) als auch zum Weltkoordinatensystem (extrinsisch) beschrieben werden, derart ausgebildet, dass in Bezug auf die Sensorik SE_{A} die intrinsischen Systemparameter SP_{Ai} und die extrinsischen Systemparameter SP_{Ae} angegeben werden können und in Abhängigkeit der Systemparameter SP_{Ai}, SP_{Ae} und des modifizierten Systemmerkmals SM'_{_}FSES_{A} durch die homogene Transformation [Tₕ] eine modifizierte 6D-Systempose [T_{h_}FSES_{A}]* beschrieben und charakterisiert werden kann.

Das Gleiche ist in dem kalibrierten Fahrzeug-Sensorsystem FSES_{B} mit der weiteren Sensorik SE_{B} möglich, wenn die Steuer- und Auswerteeinheit SAE und die Sensorik SE_{B} miteinander verbunden und im Hinblick auf das allgemein bekannte Prinzip einer Koordinatentransformation durch die homogene Transformation [Tₕ], bei der Position und Orientierung der Objekte des Fahrzeug-Sensorsystems FSES_{B} sowohl in dem Fahrzeug-Sensorsystem FSES_{B} untereinander (intrinsisch) als auch zum Weltkoordinatensystem (extrinsisch) beschrieben werden, derart ausgebildet sind, dass in Bezug auf die Sensorik SE_{B} die intrinsischen Systemparameter SP_{Bi} und die extrinsischen Systemparameter SP_{Be} angegeben werden können und in Abhängigkeit der Systemparameter SP_{Bi}, SP_{Be} und des modifizierten Systemmerkmals SM'_{_}FSES_{B} durch die homogene Transformation [Tₕ] eine modifizierte 6D-Systempose [T_{h_}FSES_{B}]* beschrieben und charakterisiert werden kann.

Für das Durchführen der Selbstkalibrierung sind die Sensoriken SE_{A}, SE_{B} und die Steuer- und Auswerteeinheiten SAE in den Fahrzeug-Sensorsystemen FSES_{A}, FSES_{B} nun wie folgt ausgebildet:
Die Sensorik SE_{A} in dem Fahrzeug-Sensorsystem FSES_{A} erfasst von dem kalibrierten Fahrzeug-Sensorsystem FSES_{B}, wobei dieses in der durch die Sensorik SE_{A} vorgegebenen Reichweite RW_{_}SE_{A}, die sich vorzugsweise an die Sichtweite orientiert, von dem Fahrzeug-Sensorsystemen FSES_{A} entfernt ist, in Bezug auf die Systemparameter SP_{Ae}, SP_{Ai} mindestens ein extrahiertes modifiziertes erstes Systemmerkmal FSES_{A_}SM'_{_}FSES_{B}. Die Extrahierung wird dabei wieder z.B. durch Segmentierung natürlicher Merkmale des kalibrierten Fahrzeug-Sensorsystems FSES_{B} oder durch Hinzufügen spezieller künstlicher Merkmale zu natürlichen Merkmalen des kalibrierten Fahrzeug-Sensorsystems FSES_{B}, z.B. Reflektor-Marken für Laserscanner, erreicht.

Im Gegenzug wird durch die weitere Sensorik SE_{B} in dem kalibrierten Fahrzeug-Sensorsystem FSES_{B} von dem Fahrzeug-Sensorsystem FSES_{A}, wobei dieses in der durch die Sensorik SE_{B} vorgegebenen weiteren Reichweite RW_{_}SE_{B}, die sich wieder vorzugsweise an die Sichtweite orientiert, von dem kalibrierten Fahrzeug-Sensorsystemen FSES_{B} entfernt ist, in Bezug auf die Systemparameter SP_{Be}, SP_{Bi} mindestens ein extrahiertes modifiziertes zweites Systemmerkmal FSES_{B_}SM'_{_}FSES_{A} erfasst. Die Extrahierung wird auch hier wieder z.B. durch Segmentierung natürlicher Merkmale des Fahrzeug-Sensorsystems FSES_{A} oder durch Hinzufügen spezieller künstlicher Merkmale zu natürlichen Merkmalen des Fahrzeug-Sensorsystems FSES_{A}, z.B. Reflektor-Marken für Laserscanner, erreicht. Die weitere Reichweite RW_{_}SE_{B} ist vorzugsweise mit der Reichweite RW_{_}SE_{A} im Wesentlichen identisch. Dies bedeutet, dass die beiden Fahrzeug-Sensorsysteme FSES_{A}, FSES_{B} zwar an jeweils voneinander entfernten Orten aber im Wesentlichen gleichzeitig die jeweiligen Systemmerkmale erfassen. Die Einschränkung "im Wesentlichen" ist notwendig, weil die beiden Fahrzeug-Sensorsysteme FSES_{A}, FSES_{B} die Systemmerkmale erfassen können, wenn sie sich relativ zueinander bewegen, also zumindest teilweise im Fahrtzustand sind (die Reichweiten können hier aufgrund der Bewegung/Relativbewegung nicht absolut identisch sein) oder aber sich nicht fortbewegen, also im Ruhezustand sind (hier sind die Reichweiten identisch). Es ist alternativ aber auch möglich, dass die beiden Fahrzeug-Sensorsysteme FSES_{A}, FSES_{B} wieder an jeweils voneinander entfernten Orten aber zu unterschiedlichen Zeitpunkten die jeweiligen Systemmerkmale erfassen.

Die mit der Sensorik SE_{A} verbundene Steuer- und Auswerteeinheit SAE in dem Fahrzeug-Sensorsystem FSES_{A} beschreibt und charakterisiert, z.B. mittels Berechnung, in Abhängigkeit der Systemparameter SP_{Ae}, SP_{Ai} und des modifizierten ersten Systemmerkmals FSES_{A_}SM'_{_}FSES_{B} durch die homogene Transformation [Tₕ] eine das kalibrierte Fahrzeug-Sensorsystem FSES_{B} spezifizierende modifizierte 6D-Systempose [FSES_{A_}T_{h_}FSES_{B}]* und erzeugt dann auf der Basis der das kalibrierte Fahrzeug-Sensorsystem FSES_{B} spezifizierenden modifizierten 6D-Systempose [FSES_{A_}T_{h_}FSES_{B}]* erste Relativinformationen RI1*.

In dem kalibrierten Fahrzeug-Sensorsystem FSES_{B} werden von der mit der weiteren Sensorik SE_{B} verbundenen Steuer- und Auswerteeinheit SAE in Abhängigkeit der Systemparameter SP_{Be}, SP_{Bi} und des modifizierten zweiten Systemmerkmals FSES_{B_}SM'_{_}FSES_{A} durch die homogene Transformation [Tₕ] eine das Fahrzeug-Sensorsystem FSES_{A} spezifizierende modifizierte 6D-Systempose [FSES_{B_}T_{h_}FSES_{A}]*, z.B. mittels Berechnung, beschrieben und charakterisiert und dann auf der Basis der das Fahrzeug-Sensorsystem FSES_{A} spezifizierenden modifizierten 6D-Systempose [FSES_{B_}T_{h_}FSES_{A}]* zweite Relativinformationen RI2* erzeugt.

Die in den Fahrzeug-Sensorsystemen FSES_{A}, FSES_{B} erzeugten Relativinformationen RI1*, RI2* werden nun ausgetauscht, d.h. das kalibrierte Fahrzeug-Sensorsystem FSES_{B} überträgt die zweiten Relativinformationen RI2* an das Fahrzeug-Sensorsystem FSES_{A} und die erste Relativinformationen RI1* werden im Gegenzug von dem Fahrzeug-Sensorsystem FSES_{A} an das kalibrierte Fahrzeug-Sensorsystem FSES_{B} übertragen. Für diese Übertragung enthalten beide Fahrzeug-Sensorsysteme FSES_{A}, FSES_{B} die Kommunikationseinheit KE, die als Sende-/Empfangseinrichtung ausgebildet ist. Das bedeutet, dass die zweiten Relativinformationen RI2* durch das kalibrierte Fahrzeug-Sensorsystem FSES_{B} gesendet und von dem Fahrzeug-Sensorsystem FSES_{A} empfangen. Gleiches passiert mit vertauschten Rollen mit den ersten Relativinformationen RI1*. Die Relativinformationen RI1*, RI2* werden dabei vorzugsweise mittels direkter Kommunikation zwischen den Kommunikationseinheiten KE der beiden Fahrzeug-Sensorsystemen FSES_{A}, FSES_{B} übermittelt. Alternativ ist es aber auch möglich, dass die Relativinformationen RI1*, RI2* durch indirekte Kommunikation, z.B. über die den Fahrzeug-Sensorsystemen FSES_{A}, FSES_{B} zugeordnete Leitzentrale LZ übermittelt werden.

In der FIGUR 2 ist die Übermittlung der Relativinformationen RI1*, RI2* nur für die zweiten Relativinformationen RI2* dargestellt, weil die für die Durchführung der Selbstkalibrierung abschließende Weiterverarbeitung der Relativinformationen RI1*, RI2* nur für das Fahrzeug-Sensorsystem FSES_{A} in all seinen Facetten mit den dafür vorgesehenen Einheiten bzw. Komponenten dargestellt ist und weil dieses Fahrzeug-Sensorsystem FSES_{A} ja über das das kalibrierte Fahrzeug-Sensorsystem FSES_{B} kalibriert werden soll.

Die für die Durchführung der Selbstkalibrierung abschließende Weiterverarbeitung der Relativinformationen RI1*, RI2* erfolgt in dem Fahrzeug-Sensorsystem FSES_{A} in der Funktionseinheit FTE, die gemeinsam gebildet wird aus der Steuer- und Auswerteeinheit SAE, der Kommunikationseinheit KE und der Vergleichseinheit VE, wobei die Kommunikationseinheit KE und die Vergleichseinheit VE mit der Steuer- und Auswerteeinheit SAE verbunden sind. Diese Funktionseinheit FTE ist derart ausgebildet, dass die in der Kommunikationseinheit KE empfangenen zweiten Relativinformationen RI2* über den Weg der Steuer- und Auswerteeinheit SAE in die Vergleichseinheit VE und die in der Steuer- und Auswerteeinheit SAE erzeugten ersten Relativinformationen RI1* in die Vergleichseinheit VE gelangen und die Vergleichseinheit VE die ersten Relativinformationen RI1* mit den zweiten Relativinformationen RI2* vergleicht, so dass, wenn die modifizierte, in den ersten Relativinformationen RI1* enthaltene, das kalibrierte Fahrzeug-Sensorsystem FSES_{B} spezifizierende 6D-Systempose [FSES_{A_}T_{h_}FSES_{B}]* und die modifizierte, in den zweiten Relativinformationen RI2* enthaltene, das Fahrzeug-Sensorsystem FSES_{A} spezifizierende 6D-Systempose [FSES_{B_}T_{h_}FSES_{A}]* identisch sind, das Fahrzeug-Sensorsystem FSES_{A} kalibriert ist, anderenfalls werden durch Änderung der Systemparameter SP_{Ae}, SP_{Ai} des Fahrzeug-Sensorsystems FSES_{A}, vorzugsweise infolge einer Optimierungsprozedur in dem Fahrzeug-Sensorsystem FSES_{A}, angepasste zweite Relativinformationen RI2*' benutzt, die von dem kalibrierten Fahrzeug-Sensorsystem FSES_{B} auf der Basis einer gleichfalls angepassten, das Fahrzeug-Sensorsystem FSES_{A} spezifizierenden 6D-Systempose [FSES_{B_}T_{h_}FSES_{A}]*' erzeugbar sind, und die angepassten zweiten Relativinformationen RI2*' als neue zweiten Relativinformationen RI2* mit den ersten Relativinformationen RI1* für den 6D-Systemposen-Identitätscheck verglichen.

Der Identitätscheck bzw. Identitätsvergleich wird ebenfalls von der gemeinsamem Funktionseinheit FTE geleistet, bei der die Vergleichseinheit VE und die Steuer- und Auswerteeinheit SAE hierfür derart ausgebildet sind, dass die durch die homogene Transformation [Tₕ] beschriebenen und charakterisierten modifizierten 6D-Systemposen [FSES_{A_}T_{h_}FSES_{B}]* und [FSES_{B_}T_{h_}FSES_{A}]* Transformationsmatrizen-basiert multipliziert werden. Gemäß der Darstellung in der FIGUR 2 liefert diese Multiplikationsoperation ein Ergebnis nach der Maßgabe,
[FSES_{A_}T_{h_}FSES_{B}] * x [FSES_{B_}T_{h_}FSES_{A}] * ≠ [E] mit "[E]" als Einheitsmatrix. Dieses Ergebnis sagt aus, dass die das kalibrierte Fahrzeug-Sensorsystem FSES_{B} spezifizierende modifizierte 6D-Systempose [FSES_{A_}T_{h_}FSES_{B}]* und die das Fahrzeug-Sensorsystem FSES_{A} spezifizierende modifizierte 6D-Systempose [FSES_{B_}T_{h_}FSES_{A}]* nicht identisch sind.

Dieses bedeutet letztlich, dass die Kalibrierung fehlgeschlagen ist und zuvor beschrieben mit angepassten Systemparametern wiederholt bzw. fortgeführt wird. So kann z.B. gemäß der FIGUR 2 (im Vergleich zu der FIGUR 1) die Sensorik SE_{A} des Fahrzeug-Sensorsystems FSES_{A} Sensorik A verschoben sein, was beispielsweise auf mechanische Krafteinwirkung oder fehlerhafte Encoderwerte zurückzuführen ist.

Die Vergleichseinheit VE und die Steuer- und Auswerteeinheit SAE bilden vorzugsweise wieder die weitere Funktionseinheit zum Durchführen der homogenen Transformation und des Identitätsvergleichs, die als Computer-Programm-Produkt CPP, also softwaremäßig, ausgebildet ist, das den nicht-flüchtigen, lesbaren Speicher SP, in dem prozessor-lesbare Steuerprogrammbefehle des die homogene Transformation und den Identitätsvergleich durchführenden Programm-Moduls PGM gespeichert sind, und den mit dem Speicher SP verbundenen Prozessor PZ, der die Steuerprogrammbefehle des Programm-Moduls PGM zur Durchführung der homogenen Transformation und des Identitätsvergleichs ausführt, enthält.

Die softwaremäßig Ausbildung des Computer-Programm-Produkts CPP kann sogar wieder so weit gehen, dass in dem nicht-flüchtigen, lesbaren Speicher SP prozessor-lesbare Steuerprogrammbefehle des auf die Durchführung des Verfahrens zum Durchführen der Selbstkalibrierung des Fahrzeug-Sensorsystems FSES_{A}, insbesondere des Autonomen Fahrzeugs, ausgedehnten Programm-Moduls PGM' gespeichert sind und in dem mit dem Speicher SP verbundenen Prozessor PZ die Steuerprogrammbefehle des Programm-Moduls PGM' zur Verfahrensdurchführung ausgeführt werden.

## Patentansprüche

1. Verfahren zum Durchführen der Kalibrierung eines Fahrzeug-Sensorsystems (FSES_{A}), insbesondere eines Autonomen Systems, bei dem
**a**) mindestens ein extrahiertes, insbesondere erreichbar durch Segmentierung natürlicher Merkmale des Fahrzeug-Sensorsystems (FSES_{A}) oder durch Hinzufügen spezieller künstlicher Merkmale zu natürlichen Merkmalen des Fahrzeug-Sensorsystems (FSES_{A}), z.B. Reflektor-Marken für Laserscanner, Systemmerkmal (SM_{_}FSES_{A}, SM'_{_}FSES_{A}) mit einer mindestens einen Sensor enthaltenden Sensorik (SE_{A}) des Fahrzeug-Sensorsystems (FSES_{A}) erfassbar ist, die mit anderen Sensoriken (SE) anderer, kalibrierter Fahrzeug-Sensorsysteme (FSES) entweder vergleichbar ist oder unterschiedlich, aber jeweils in Bezug auf das jeweilige extrahierte, erfassbare Systemmerkmal (SM_{_}FSES_{A}, SM'_{_}FSES_{A}) vergleichbar ist,
**b**) in Bezug auf die Sensorik (SE_{A}) extrinsische Systemparameter (SP_{Ae}) und intrinsische Systemparameter (SP_{Ai}) angebbar sind und
**c**) in Abhängigkeit der Systemparameter (SP_{Ae}, SP_{Ai}) und des Systemmerkmals (SM_{_}FSES_{A}, SM'_{_}FSES_{A}) durch homogene Transformation [Tₕ] eine 6D-Systempose [T_{h_}FSES_{A}], [T_{h_}FSES_{A}]* beschreib- und charakterisierbar ist,
**dadurch gekennzeichnet, dass**
**d**) von einem kalibrierten Fahrzeug-Sensorsystem (FSES_{B}) der anderen kalibrierten Fahrzeug-Sensorsysteme (FSES), das in einer durch die Sensorik (SE_{A}) vorgegebenen Reichweite (RW_{_}SE_{A}), insbesondere in einer durch die Sichtweite vorgegebenen Reichweite, befindbar ist, in Bezug auf die Systemparameter (SP_{Ae}, SP_{Ai}) mindestens ein extrahiertes, insbesondere erreichbar durch Segmentierung natürlicher Merkmale kalibrierten Fahrzeug-Sensorsystems (FSES_{B}) oder durch Hinzufügen spezieller künstlicher Merkmale zu natürlichen Merkmalen des kalibrierten Fahrzeug-Sensorsystems (FSES_{B}), z.B. Reflektor-Marken für Laserscanner, erstes Systemmerkmal (FSES_{A_}SM_{_}FSES_{B}, FSES_{A_}SM'_{_}FSES_{B}) durch die Sensorik (SE_{A}) erfasst wird,
**e**) in Abhängigkeit der Systemparameter (SP_{Ae}, SP_{Ai}) und des ersten Systemmerkmals (FSES_{A_}SM_{_}FSES_{B}, FSES_{A_}SM'_{_}FSES_{B}) durch die homogene Transformation [Tₕ] eine das kalibrierte Fahrzeug-Sensorsystem (FSES_{B}) spezifizierende 6D-Systempose [FSES_{A_}T_{h_}FSES_{B}], [FSES_{A_}T_{h_}FSES_{B}]* beschrieben und charakterisiert wird,
**f**) auf der Basis der das kalibrierte Fahrzeug-Sensorsystem (FSES_{B}) spezifizierenden 6D-Systempose [FSES_{A_}T_{h_}FSES_{B}], [FSES_{A_}T_{h_}FSES_{B}]* erste Relativinformationen (RI1, RI1*) erzeugt werden,
**g**) zweite, von dem Fahrzeug-Sensorsystem (FSES_{A}) empfangene-Relativinformationen (RI2, RI2*) benutzt werden, die von dem kalibrierten Fahrzeug-Sensorsystem (FSES_{B}) auf der Basis einer das Fahrzeug-Sensorsystem (FSES_{A}) spezifizierenden 6D-Systempose [FSES_{B_}T_{h_}FSES_{A}], [FSES_{B_}T_{h_}FSES_{A}]* erzeugbar sind, wobei in dem kalibrierten Fahrzeug-Sensorsystem (FSES_{B}) mit einer weiteren Sensorik (SE_{B}) der anderen Sensoriken (SE) und in Bezug auf die weitere Sensorik (SE_{B}) angebbaren, weiteren sowohl extrinsischen Systemparametern (SP_{Be}) als auch intrinsischen Systemparametern (SP_{Bi}) von dem in einer durch die weitere Sensorik (SE_{B}) vorgegebenen, vorzugsweise mit der Reichweite (RW_{_}SE_{A}) im Wesentlichen identischen, weiteren Reichweite (RW_{_}SE_{B}) befindbaren Fahrzeug-Sensorsystem (FSES_{A}) mindestens ein extrahiertes, insbesondere erreichbar durch Segmentierung natürlicher Merkmale des Fahrzeug-Sensorsystems (FSES_{A}) oder durch Hinzufügen spezieller künstlicher Merkmale zu natürlichen Merkmalen des Fahrzeug-Sensorsystems (FSES_{A}), z.B. Reflektor-Marken für Laserscanner, zweites Systemmerkmal (FSES_{B_}SM_{_}FSES_{A}, FSES_{B_}SM'_{_}FSES_{A}) erfassbar und in Abhängigkeit der weiteren Systemparameter (SP_{Be}, SP_{Bi}) und des zweiten Systemmerkmals (FSES_{B_}SM_{_}FSES_{A}, FSES_{B_}SM'_{_}FSES_{A}) durch homogene Transformation [Tₕ] die besagte 6D-Systempose [FSES_{B_}T_{h_}FSES_{A}], [FSES_{B_}T_{h_}FSES_{A}]* beschreib- und charakterisierbar ist,
**h**) die ersten Relativinformationen (RI1, RI1*) mit den zweiten Relativinformationen (RI2, RI2*) verglichen werden, so dass, wenn die in den ersten Relativinformationen (RI1, RI1*) enthaltene, das kalibrierte Fahrzeug-Sensorsystem (FSES_{B}) spezifizierende 6D-Systempose [FSES_{A_}T_{h_}FSES_{B}], [FSES_{A_}T_{h_}FSES_{B}]* und die in den zweiten Relativinformationen (RI2, RI2*) enthaltene, das Fahrzeug-Sensorsystem (FSES_{A}) spezifizierende 6D-Systempose [FSES_{B_}T_{h_}FSES_{A}], [FSES_{B_}T_{h_}FSES_{A}]* identisch sind, das Fahrzeug-Sensorsystem (FSES_{A}) kalibriert ist, anderenfalls werden durch Änderung der Systemparameter (SP_{Ae}, SP_{Ai}) des Fahrzeug-Sensorsystems (FSES_{A}), vorzugsweise infolge einer Optimierungsprozedur in dem Fahrzeug-Sensorsystem (FSES_{A}), angepasste zweite Relativinformationen (RI2*') benutzt, die von dem kalibrierten Fahrzeug-Sensorsystem (FSES_{B}) auf der Basis einer gleichfalls angepassten, das Fahrzeug-Sensorsystem (FSES_{A}) spezifizierenden 6D-Systempose [FSES_{B_}T_{h_}FSES_{A}]*' erzeugt werden
und die angepassten zweiten Relativinformationen (RI2*') als neue zweite Relativinformationen (RI2*) mit den ersten Relativinformationen (RI1*) für einen 6D-Systemposen-Identitätscheck verglichen.

2. Verfahren nach Anspruch 1, **dadurch gekennzeichnet, dass** die Identität der durch die homogene Transformation [Tₕ] beschriebenen und charakterisierten 6D-Systemposen [FSES_{A_}T_{h_}FSES_{B}] und [FSES_{B_}T_{h_}FSES_{A}] mittels einer Transformationsmatrizen-Multiplikation nach der Maßgabe, [FSES_{A_}T_{h_}FSES_{B}] x [FSES_{B_}T_{h_}FSES_{A}] = [E] mit "[E]" als Einheitsmatrix, und
die Nicht-Identität der durch die homogene Transformation [Tₕ] beschriebenen und charakterisierten 6D-Systemposen [FSES_{A_}T_{h_}FSES_{B}]* und [FSES_{B_}T_{h_}FSES_{A}]* mittels einer Transformationsmatrizen-Multiplikation nach der Maßgabe,
[FSES_{A_}T_{h_}FSES_{B}]* x [FSES_{B_}T_{h_}FSES_{A}]* ≠ [E] mit "[E]" als Einheitsmatrix,
festgestellt werden.

3. Verfahren nach Anspruch 1 oder 2, **dadurch gekennzeichnet, dass**
die zweiten Relativinformationen (RI2, RI2*, RI2*') von dem kalibrierten Fahrzeug-Sensorsystem (FSES_{B}) für die Benutzung durch direkte Kommunikation mit dem Fahrzeug-Sensorsystem (FSES_{A}) oder durch indirekte Kommunikation, vorzugsweise über eine den Fahrzeug-Sensorsystemen (FSES_{A}, FSES_{B}, FSES) zugeordnete Leitzentrale (LZ), mit dem Fahrzeug-Sensorsystem (FSES_{A}) übermittelt werden.

4. Verfahren nach einem der Ansprüche 1 bis 3, **dadurch gekennzeichnet, dass**
die Fahrzeug-Sensorsysteme (FSES_{A}, FSES_{B}, FSES) Schienenfahrzeug-Sensorsysteme oder Straßenfahrzeug-Sensorsysteme sind.

5. Verfahren nach einem der Ansprüche 1 bis 4, **dadurch gekennzeichnet, dass**
der Sensor ein 3D-Sensor, ein RADAR-basierter Sensor, ein Kamera-Sensor, ein Laser-Sensor oder ein Ultraschall-Sensor ist.

6. Verfahren nach einem der Ansprüche 1 bis 5, **dadurch gekennzeichnet, dass**
die Sensoriken (SE_{A}, SE_{B}, SE) Laserscanner und Encoder zur Fahrwegermittlung enthalten.

7. Fahrzeug-Sensorsystem (FSES_{A}), insbesondere Autonomes System, mit
**a1**) einer mindestens einen Sensor enthaltenden Sensorik (SE_{A}), die mindestens ein extrahiertes, insbesondere erreichbar durch Segmentierung natürlicher Merkmale des Fahrzeug-Sensorsystems (FSES_{A}) oder durch Hinzufügen spezieller künstlicher Merkmale zu natürlichen Merkmalen des Fahrzeug-Sensorsystems (FSES_{A}), z.B. Reflektor-Marken für Laserscanner, Systemmerkmal (SM_{_}FSES_{A}) erfasst und im Vergleich zu anderen Sensoriken (SE) anderer, kalibrierter Fahrzeug-Sensorsysteme (FSES) entweder mit diesen vergleichbar ist oder unterschiedlich, aber jeweils in Bezug auf das jeweilige extrahierte, erfassbare Systemmerkmal (SM_{_}FSES_{A}, SM'_{_}FSES_{A}) vergleichbar ist, und
**a2)** einer Steuer- und Auswerteeinheit (SAE), die mit der Sensorik (SE_{A}) verbunden ist und mit dieser derart ausgebildet ist, dass
**a12-1**) in Bezug auf die Sensorik (SE_{A}) extrinsische Systemparameter (SP_{Ae}) und intrinsische Systemparameter (SP_{Ai}) angebbar sind und
**a12-2**) in Abhängigkeit der Systemparameter (SP_{Ae}, SP_{Ai}) und des Systemmerkmals (SM_{_}FSES_{A}, SM'_{_}FSES_{A}) durch homogene Transformation [Tₕ] eine 6D-Systempose [T_{h_}FSES_{A}], [T_{h_}FSES_{A}]* beschreib- und charakterisierbar ist, **gekennzeichnet durch**
**b**) eine Kommunikationseinheit (KE) und eine Vergleichseinheit (VE), die mit der Steuer- und Auswerteeinheit (SAE) verbunden sind und dabei mit dieser eine gemeinsame Funktionseinheit (FTE) bilden, die derart ausgebildet ist, dass
**b1**) die Sensorik (SE_{A}) von einem kalibrierten Fahrzeug-Sensorsystem (FSES_{B}) der anderen kalibrierten Fahrzeug-Sensorsysteme (FSES), das in einer **durch** die Sensorik (SE_{A}) vorgegebenen Reichweite (RW_{_}SE_{A}), insbesondere in einer durch die Sichtweite vorgegebenen Reichweite, befindbar ist, in Bezug auf die Systemparameter (SP_{Ae}, SP_{Ai}) mindestens ein extrahiertes, insbesondere erreichbar **durch** Segmentierung natürlicher Merkmale des kalibrierten Fahrzeug-Sensorsystems (FSES_{B}) oder **durch** Hinzufügen spezieller künstlicher Merkmale zu natürlichen Merkmalen des kalibrierten Fahrzeug-Sensorsystems (FSES_{B}), z.B. Reflektor-Marken für Laserscanner, erstes Systemmerkmal (FSES_{A_}SM_{_}FSES_{B}, FSES_{A_}SM'_{_}FSES_{B}) erfasst,
**b2**) die Steuer- und Auswerteeinheit (SAE) in Abhängigkeit der Systemparameter (SP_{Ae}, SP_{Ai}) und des ersten Systemmerkmals (FSES_{A_}SM_{_}FSES_{B}, FSES_{A_}SM'_{_}FSES_{B}) **durch** die homogene Transformation [Tₕ] eine das kalibrierte Fahrzeug-Sensorsystem (FSES_{B}) spezifizierende 6D-Systempose [FSES_{A_}T_{h_}FSES_{B}], [FSES_{A_}T_{h_}FSES_{B}]* beschreibt und charakterisiert,
**b3**) die Steuer- und Auswerteeinheit (SAE) auf der Basis der das kalibrierte Fahrzeug-Sensorsystem (FSES_{B}) spezifizierenden 6D-Systempose [FSES_{A_}T_{h_}FSES_{B}], [FSES_{A_}T_{h_}FSES_{B}]* erste Relativinformationen (RI1, RI1*) erzeugt,
**b4**) die Kommunikationseinheit (KE) zweite Relativinformationen (RI2, RI2*) empfängt, die von dem kalibrierten Fahrzeug-Sensorsystem (FSES_{B}) auf der Basis einer das Fahrzeug-Sensorsystem (FSES_{A}) spezifizierenden 6D-Systempose [FSES_{B_}T_{h_}FSES_{A}], [FSES_{B_}T_{h_}FSES_{A}]* erzeugbar sind, wobei in dem kalibrierten Fahrzeug-Sensorsystem (FSES_{B}) mit einer weiteren Sensorik (SE_{B}) der anderen Sensoriken (SE) und in Bezug auf die weitere Sensorik (SE_{B}) angebbaren, weiteren sowohl extrinsischen Systemparametern (SP_{Be}) als auch intrinsischen Systemparametern (SP_{Bi}) von dem in einer **durch** die weitere Sensorik (SE_{B}) vorgegebenen, vorzugsweise mit der Reichweite (RW_{_}SE_{A}) im Wesentlichen identischen, weiteren Reichweite (RW_{_}SE_{B}) befindbaren Fahrzeug-Sensorsystem (FSES_{A}) mindestens ein extrahiertes, insbesondere erreichbar durch Segmentierung natürlicher Merkmale des Fahrzeug-Sensorsystems (FSES_{A}) oder **durch** Hinzufügen spezieller künstlicher Merkmale zu natürlichen Merkmalen des Fahrzeug-Sensorsystems (FSES_{A}), z.B. Reflektor-Marken für Laserscanner, zweites Systemmerkmal (FSES_{B_}SM_{_}FSES_{A}, FSES_{B_}SM'_{_}FSES_{A}) erfassbar und in Abhängigkeit der weiteren Systemparameter (SP_{Be}, SP_{Bi}) und des zweiten Systemmerkmals (FSES_{B_}SM_{_}FSES_{A}, FSES_{B_}SM'_{_}FSES_{A}) **durch** homogene Transformation [Tₕ] die besagte 6D-Systempose [FSES_{B_}T_{h_}FSES_{A}], [FSES_{B_}T_{h_}FSES_{A}]* beschreib- und charakterisierbar ist,
**b5**) die Vergleichseinheit (VE) die ersten Relativinformationen (RI1, RI1*) mit den zweiten Relativinformationen (RI2, RI2*) vergleicht, so dass, wenn die in den ersten Relativinformationen (RI1, RI1*) enthaltene, das kalibrierte Fahrzeug-Sensorsystem (FSES_{B}) spezifizierende 6D-Systempose [FSES_{A_}T_{h_}FSES_{B}], [FSES_{A_}T_{h_}FSES_{B}]* und die in den zweiten Relativinformationen (RI2, RI2*) enthaltene, das Fahrzeug-Sensorsystem (FSES_{A}) spezifizierende 6D-Systempose [FSES_{B_}T_{h_}FSES_{A}], [FSES_{B_}T_{h_}FSES_{A}]* identisch sind, das Fahrzeug-Sensorsystem (FSES_{A}) kalibriert ist, anderenfalls werden **durch** Änderung der Systemparameter (SP_{Ae}, SP_{Ai}) des Fahrzeug-Sensorsystems (FSES_{A}), vorzugsweise infolge einer Optimierungsprozedur in dem Fahrzeug-Sensorsystem (FSES_{A}), angepasste zweite Relativinformationen (RI2*') benutzt, die von dem kalibrierten Fahrzeug-Sensorsystem (FSES_{B}) auf der Basis einer gleichfalls angepassten, das Fahrzeug-Sensorsystem (FSES_{A}) spezifizierenden 6D-Systempose [FSES_{B_}T_{h_}FSES_{A}]*' erzeugt werden, und die angepassten zweiten Relativinformationen (RI2*') als neue zweite Relativinformationen (RI2*) mit den ersten Relativinformationen (RI1*) für einen 6D-Systemposen-Identitätscheck verglichen.

8. Fahrzeug-Sensorsystem (FSES_{A}) nach Anspruch 7, **dadurch gekennzeichnet, dass**
die Vergleichseinheit (VE) und Steuer- und Auswerteeinheit (SAE) derart ausgebildet sind, dass
die Identität der durch die homogene Transformation [Tₕ] die Identität der durch die homogene Transformation [Tₕ] beschriebenen und charakterisierten 6D-Systemposen [FSES_{A_}T_{h_}FSES_{B}] und [FSES_{B_}T_{h_}FSES_{A}] mittels einer Transformationsmatrizen-Multiplikation nach der Maßgabe, [FSES_{A_}T_{h_}FSES_{B}] x [FSES_{B_}T_{h_}FSES_{A}] = [E] mit "[E]" als Einheitsmatrix, und
die Nicht-Identität der durch die homogene Transformation [Tₕ] beschriebenen und charakterisierten 6D-Systemposen [FSES_{A_}T_{h_}FSES_{B}]* und [FSES_{B_}T_{h_}FSES_{A}]* mittels einer Transformationsmatrizen-Multiplikation nach der Maßgabe, [FSES_{A_}T_{h_}FSES_{B}]* x [FSES_{B_}T_{h_}FSES_{A}]* ≠ [E] mit "[E]" als Einheitsmatrix,
festgestellt werden.

9. Fahrzeug-Sensorsystem (FSES_{A}) nach Anspruch 7 oder 8, **dadurch gekennzeichnet, dass**
eine aus der Vergleichseinheit (VE) und der Steuer- und Auswerteeinheit (SAE) gebildete weitere Funktionseinheit zum Durchführen der homogenen Transformation und des Identitätsvergleichs als Computer-Programm-Produkt (CPP) ausgebildet ist, das einen nicht-flüchtigen, lesbaren Speicher (SP), in dem prozessor-lesbare Steuerprogrammbefehle eines die homogene Transformation und den Identitätsvergleich durchführenden Programm-Moduls (PGM) gespeichert sind, und einen mit dem Speicher (SP) verbundenen Prozessor (PZ), der die Steuerprogrammbefehle des Programm-Moduls (PGM) zur Durchführung der homogenen Transformation und des Identitätsvergleichs ausführt, enthält.

10. Fahrzeug-Sensorsystem (FSES_{A}) nach einem der Ansprüche 7 bis 9, **dadurch gekennzeichnet, dass**
die Kommunikationseinheit (KE) derart ausgebildet ist, dass die zweiten Relativinformationen (RI2, RI2*) von dem kalibrieten Fahrzeug-Sensorsystem (FSES_{B}) durch direkte Kommunikation mit dem Fahrzeug-Sensorsystem (FSES_{A}) oder durch indirekte Kommunikation, vorzugsweise über eine den Fahrzeug-Sensorsystemen (FSES_{A}, FSES_{B}, FSES) zugeordnete Leitzentrale (LZ), mit dem Fahrzeug-Sensorsystem (FSES_{A}) empfangen werden.

11. Fahrzeug-Sensorsystem (FSES_{A}) nach einem der Ansprüche 7 bis 10, **gekennzeichnet durch**
ein Schienenfahrzeug-Sensorsystem oder Straßenfahrzeug-Sensorsystem.

12. Fahrzeug-Sensorsystem (FSES_{A}) nach einem der Ansprüche 7 bis 11, **dadurch gekennzeichnet, dass**
der Sensor ein 3D-Sensor, ein RADAR-basierter Sensor, ein Kamera-Sensor, ein Laser-Sensor oder ein Ultraschall-Sensor ist.

13. Fahrzeug-Sensorsystem (FSES_{A}) nach einem der Ansprüche 7 bis 12, **dadurch gekennzeichnet, dass**
die Sensoriken (SE_{A}, SE_{B}, SE) Laserscanner und Encoder zur Fahrwegermittlung enthalten.

14. Computer-Programm-Produkt (CPP) **gekennzeichnet durch** einen nicht-flüchtigen, lesbaren Speicher (SP), in dem prozessor-lesbare Steuerprogrammbefehle eines ein Verfahren zum Durchführen der Kalibrierung eines Fahrzeug-Sensorsystems (FSES_{A}), insbesondere eines Autonomen Fahrzeugs, nach einem der Ansprüche 1 bis 6 durchführenden Programm-Moduls (PGM') gespeichert sind, und einen mit dem Speicher (SP) verbundenen Prozessor (PZ), der die Steuerprogrammbefehle des Programm-Moduls (PGM') zur Verfahrensdurchführung ausführt.

## Claims

1. Method for carrying out the calibration of a vehicle sensor system (FSES_{A}), in particular of an autonomous system, in which
**a**) at least one extracted system feature (SM_{_}FSES_{A}, SM'_{_}FSES_{A}), which extraction can, in particular, be achieved by segmenting natural features of the vehicle sensor system (FSES_{A}) or by adding specific artificial features to natural features of the vehicle sensor system (FSES_{A}), e.g. reflector markers for laser scanners, can be sensed by a sensor arrangement (SE_{A}), containing at least one sensor, of the vehicle sensor system (FSES_{A}), which sensor arrangement (SE_{A}) is either comparable with other sensor arrangements (SE) of other calibrated vehicle sensor systems (FSES) or different, but in each case is comparable with respect to the respective extracted system feature (SM_{_}FSES_{A}, SM'_{_}FSES_{A}) which can be sensed,
**b**) system parameters (SP_{Ae}) which are extrinsic, and system parameters (SP_{Ai}) which are intrinsic, with respect to the sensor arrangement (SE_{A}) can be specified, and
**c**) a 6D system pose [T_{h_}FSES_{A}], [T_{h_}FSES_{A}]* can be described and characterized as a function of the system parameters (SP_{Ae}, SP_{Ai}) and of the system feature (SM_{_}FSES_{A}, SM'_{_}FSES_{A}) by means of homogeneous transformation [Tₕ],
**characterized in that**
**d**) at least one extracted first system feature (FSES_{A_}SM_{_}FSES_{B}, FSES_{A_}SM'_{_}FSES_{B}), which extraction can, in particular, be achieved by segmenting natural features of a calibrated vehicle sensor system (FSES_{B}) or by adding specific artificial features to natural features of the calibrated vehicle sensor system (FSES_{B}), e.g. reflector markers for laser scanners, is sensed by the sensor arrangement (SE_{A}) of a calibrated vehicle sensor system (FSES_{B}) of the other calibrated vehicle sensor systems (FSES), which sensor system (FSES_{B}) can be located in a range (RW_{_}SE_{A}) predefined by the sensor arrangement (SE_{A}), in particular in a range which is predefined by visual range, with respect to the system parameters (SP_{Ae}, SP_{Ai}),
**e)** a 6D system pose [FSES_{A_}T_{h_}FSES_{B}], [FSES_{A_}T_{h_}FSES_{B}]* which specifies the calibrated vehicle sensor system (FSES_{B}) is described and **characterized by** means of the homogenous transformation [Tₕ] as a function of the system parameters (SP_{Ae}, SP_{Ai}) and of the first system feature (FSES_{A_}SM_{_}FSES_{B}, FSES_{A_}SM'_{_}FSES_{B}),
**f**) first relative information items (RI1, RI1*) are generated on the basis of the 6D system pose [FSES_{A_}T_{h_}FSES_{B}], [FSES_{A_}T_{h_}FSES_{B}]* which specifies the calibrated vehicle sensor system (FSES_{B}),
**g**) second received relative information items (RI2, RI2*) which are received by the vehicle sensor system (FSES_{A}) and which can be generated by the calibrated vehicle sensor system (FSES_{B}) on the basis of a 6D system pose [FSES_{B_}T_{h_}FSES_{A}], [FSES_{B_}T_{h_}FSES_{A}]* which specifies the vehicle sensor system (FSES_{A}) are used, wherein a second system feature (FSES_{B_}SM_{_}FSES_{A}, FSES_{B_}SM'_{_}FSES_{A}) can be sensed in the calibrated vehicle sensor system (FSES_{B}) with a further sensor arrangement (SE_{B}) of the other sensor arrangements (SE) and with further both extrinsic system parameters (SP_{Be}) and intrinsic system parameters (SP_{Bi}) which can be specified with respect to the further sensor arrangement (SE_{B}), of the vehicle sensor system (FSES_{A}) which can be located in a further range (RW_{_}SE_{B}) which is predefined by the further sensor arrangement (SE_{B}) and is preferably essentially identical to the range (RW_{_}SE_{A}), at least one extracted second system feature (FSES_{B_}SM_{_}FSES_{A}, FSES_{B_}SM'_{_}FSES_{A}), which extraction can, in particular, be achieved by segmenting natural features of the vehicle sensor system (FSES_{A}) or by adding specific artificial features to natural features of the vehicle sensor system (FSES_{A}), e.g. reflector markers for laser scanners, and said 6D system pose [FSES_{B_}T_{h_}FSES_{A}], [FSES_{B_}T_{h_}FSES_{A}]* can be described and characterized as a function of the further system parameters (SP_{Be}, SP_{Bi}) and of the second system feature (FSES_{B_}SM_{_}FSES_{A}, FSES_{B_}SM'_{_}FSES_{A}) by means of homogeneous transformation [Tₕ],
**h)** the first relative information items (RI1, RI1*) are compared with the second relative information items (RI2, RI2*) so that when the 6D system pose [FSES_{A_}T_{h_}FSES_{B}], [FSES_{A_}T_{h_}FSES_{B}]* which is contained in the first relative information items (RI1, RI1*) and which specifies the calibrated vehicle sensor system (FSES_{B}) and the 6D system pose [FSES_{B_}T_{h_}FSES_{A}], [FSES_{B_}T_{h_}FSES_{A}]* which is contained in the second relative information items (RI2, RI2*) and which specifies the vehicle sensor system (FSES_{A}) are identical, the vehicle sensor system (FSES_{A}) is calibrated, and otherwise second relative information items (RI2*') which are adapted by changing the system parameters (SP_{Ae}, SP_{Ai}) of the vehicle sensor system (FSES_{A}), preferably as a result of an optimization procedure in the vehicle sensor system (FSES_{A}) and which are generated by the calibrated vehicle sensor system (FSES_{B}) on the basis of a likewise adapted 6D system pose [FSES_{B_}T_{h_}FSES_{A}]*' which specifies the vehicle sensor system (FSES_{A}) are used, and the adapted second relative information items (RI2*') are compared, as new second relative information items (RI2*), with the first relative information items (RI1*) for a 6D system pose identity check.

2. Method according to Claim 1, **characterized in that** the identity of the 6D system poses [FSES_{A_}T_{h_}FSES_{B}] and [FSES_{B_}T_{h_}FSES_{A}] which are described and **characterized by** means of the homogeneous transformation [Tₕ] is detected by means of a transformation matrix multiplication according to the measure, [FSES_{A_}T_{h_}FSES_{B}] x [FSES_{B_}T_{h_}FSES_{A}] = [E] with "[E]" as the identity matrix, and
the non-identity of the 6D system poses [FSES_{A_}T_{h_}FSES_{B}]* and [FSES_{B_}T_{h_}FSES_{A}]* which are described and **characterized by** means of the homogeneous transformation [Tₕ] is detected by means of a transformation matrix multiplication according to the measure [FSES_{A_}T_{h_}FSES_{B}]* x [FSES_{B_}T_{h_}FSES_{A}]* ≠ [E] with "[E]" as the identity matrix.

3. Method according to Claim 1 or 2, **characterized in that** the second relative information items (RI2, RI2*, RI2*') of the calibrated vehicle sensor system (FSES_{B}) are transferred for use to the vehicle sensor system (FSES_{A}) by means of direct communication with the vehicle sensor system (FSES_{A}) or by means of indirect communication, preferably via a control centre (LZ) which is assigned to the vehicle sensor systems (FSES_{A}, FSES_{B}, FSES) .

4. Method according to one of Claims 1 to 3, **characterized in that**
the vehicle sensor systems (FSES_{A}, FSES_{B}, FSES) are rail vehicle sensor systems or road vehicle sensor systems.

5. Method according to one of Claims 1 to 4, **characterized in that**
the sensor is a 3D sensor, a RADAR-based sensor, a camera sensor, a laser sensor or an ultrasonic sensor.

6. Method according to one of Claims 1 to 5, **characterized in that**
the sensor arrangements (SE_{A}, SE_{B}, SE) contain laser scanners and encoders for determining travel paths.

7. Vehicle sensor system (FSES_{A}), in particular autonomous system, having
**a1**) a sensor arrangement (SE_{A}) which contains at least one sensor and senses at least one extracted system feature (SM_{_}FSES_{A}), which extraction can, in particular, be achieved by segmenting natural features of the vehicle sensor system (FSES_{A}) or by adding specific artificial features to natural features of the vehicle sensor system (FSES_{A}), e.g. reflector markers for laser scanners, and in comparison with other sensor arrangements (SE) of other calibrated vehicle sensor systems (FSES) is either comparable with said system or different, but in each case is comparable with respect to the respective extracted system feature (SM_{_}FSES_{A}, SM'_{_}FSES_{A}) which can be sensed, and
**a2**) a control and evaluation unit (SAE) which is connected to the sensor arrangement (SE_{A}) and is embodied therewith in such a way that
**a12-1**) system parameters (SP_{Ae}) which are extrinsic, and system parameters (SP_{Ai}) which are intrinsic, with respect to the sensor arrangement (SE_{A}) can be specified, and
**a12-2**) a 6D system pose [T_{h_}FSES_{A}], [T_{h_}FSES_{A}]* can be described and characterized as a function of the system parameters (SP_{Ae}, SP_{Ai}) and of the system feature (SM_{_}FSES_{A}, SM'_{_}FSES_{A}) by means of homogeneous transformation [Tₕ],
**characterized by**
**b**) a communication unit (KE) and a comparison unit (VE), which are connected to the control and evaluation unit (SAE) and at the same time form therewith a common function unit (FTE) which is embodied in such a way that
**b1**) the sensor arrangement (SE_{A}) of a calibrated vehicle sensor system (FSES_{B}) of the other calibrated vehicle sensor systems (FSES), which can be located in a range (RW_{_}SE_{A}) which is predefined by the sensor arrangement (SE_{A}), in particular in a range which is predefined by the visual range, senses, with respect to the system parameters (SP_{Ae}, SP_{Ai}), at least one extracted first system feature (FSES_{A_}SM_{_}FSES_{B}, FSES_{A_}SM'_{_}FSES_{B}), which extraction can, in particular, be achieved by segmentation of the natural features of the calibrated vehicle sensor system (FSES_{B}) or by adding specific artificial features to natural features of the calibrated vehicle sensor system (FSES_{B}), e.g. reflector markers for laser scanners,
**b2**) the control and evaluation unit (SAE) describes and characterizes, as a function of the system parameters (SP_{Ae}, SP_{Ai}) and of the first system feature (FSES_{A_}SM_{_}FSES_{B}, FSES_{A_}SM'_{_}FSES_{B}) by means of the homogeneous transformation [Tₕ], a 6D system pose [FSES_{A_}T_{h_}FSES_{B}], [FSES_{A_}T_{h_}FSES_{B}]* which specifies the calibrated vehicle sensor system (FSES_{B}),
**b3**) the control and evaluation unit (SAE) generates first relative information items (RI1, RI1*) on the basis of the 6D system pose [FSES_{A_}T_{h_}FSES_{B}], [FSES_{A_}T_{h_}FSES_{B}]* which specifies the calibrated vehicle sensor system (FSES_{B}),
**b4**) the communication unit (KE) receives second relative information items (RI2, RI2*) which can be generated by the calibrated vehicle sensor system (FSES_{B}) on the basis of a 6D system pose [FSES_{B_}T_{h_}FSES_{A}], [FSES_{B_}T_{h_}FSES_{A}]* which specifies the vehicle sensor system (FSES_{A}), wherein a second system feature (FSES_{B_}SM_{_}FSES_{A}, FSES_{B_}SM'_{_}FSES_{A}) can be sensed in the calibrated vehicle sensor system (FSES_{B}) with a further sensor arrangement (SE_{B}) of the other sensor arrangements (SE) and with further both extrinsic system parameters (SP_{Be}) and intrinsic system parameters (SP_{Bi}) which can be specified with respect to the further sensor arrangement (SE_{B}), of the vehicle sensor system (FSES_{A}) which can be located in a further range (RW_{_}SE_{B}) which is predefined by the further sensor arrangement (SE_{B}) and is preferably essentially identical to the range (RW_{_}SE_{A}), at least one extracted second system feature (FSES_{B_}SM_{_}FSES_{A}, FSES_{B_}SM'_{_}FSES_{A}), which extraction can, in particular, be achieved by segmenting natural features of the vehicle sensor system (FSES_{A}) or by adding specific artificial features to natural features of the vehicle sensor system (FSES_{A}), e.g. reflector markers for laser scanners, and said 6D system pose [FSES_{B_}T_{h_}FSES_{A}], [FSES_{B_}T_{h_}FSES_{A}]* can be described and characterized as a function of the further system parameters (SP_{Be}, SP_{Bi}) and of the second system feature (FSES_{B_}SM_{_}FSES_{A}, FSES_{B_}SM'_{_}FSES_{A}) by means of homogeneous transformation [Tₕ],
**b5**) the comparison unit (VE) compares the first relative information items (RI1, RI1*) with the second relative information items (RI2, RI2*) so that when the 6D system pose [FSES_{A_}T_{h_}FSES_{B}], [FSES_{A_}T_{h_}FSES_{B}]* which is contained in the first relative information items (RI1, RI1*) and which specifies the calibrated vehicle sensor system (FSES_{B}) and the 6D system pose [FSES_{B}_Tₕ_FSES_{A}], [FSES_{B}_Tₕ_FSES_{A}]* which is contained in the second relative information items (RI2, RI2*) and which specifies the vehicle sensor system (FSES_{A}) are identical, the vehicle sensor system (FSES_{A}) is calibrated, and otherwise second relative information items (RI2*') which are adapted by changing the system parameters (SP_{Ae}, SP_{Ai}) of the vehicle sensor system (FSES_{A}), preferably as a result of an optimization procedure in the vehicle sensor system (FSES_{A}) and which are generated by the calibrated vehicle sensor system (FSES_{B}) on the basis of a likewise adapted 6D system pose [FSES_{B}_Tₕ_FSES_{A}]*' which specifies the vehicle sensor system (FSES_{A}) are used, and the adapted second relative information items (RI2*') are compared, as new second relative information items (RI2*), with the first relative information items (RI1*) for a 6D system pose identity check.

8. Vehicle sensor system (FSES_{A}) according to Claim 7, **characterized in that**
the comparison unit (VE) and control and evaluation unit (SAE) are embodied in such a way that the identity of the 6D system poses [FSES_{A}_Tₕ_FSES_{B}] and [FSES_{B}_Tₕ_FSES_{A}] which are described and **characterized by** means of the homogeneous transformation [Tₕ] is detected by means of a transformation matrix multiplication according to the measure, [FSES_{A}_Tₕ_FSES_{B}] x [FSES_{B}_Tₕ_FSES_{A}] = [E] with "[E]" as an identity matrix, and
the non-identity of the 6D system poses [FSES_{A}_Tₕ_FSES_{B}] * and [FSES_{B}_Tₕ_FSES_{A}]* which are described and **characterized by** means of the homogeneous transformation [Tₕ] is detected by means of a transformation matrix multiplication according to the measure [FSES_{A}_Tₕ_FSES_{B}]* x [FSES_{B}_Tₕ_FSES_{A}]* ≠ [E] with "[E]" as an identity matrix.

9. Vehicle sensor system (FSES_{A}) according to Claim 7 or 8, **characterized in that**
a further function unit which is formed from the comparison unit (VE) and the control and evaluation unit (SAE) is designed to carry out the homogenous transformation and the identity comparison as a computer programme product (CPP) which contains a non-volatile readable memory (SP) in which processor-readable control programme commands of a programme module (PGM) which carries out the homogeneous transformation and the identity comparison are stored, and a processor (PZ) which is connected to the memory (SP) and executes the control programme commands of the programme module (PGM) in order to carry out the homogeneous transformation and the identity comparison.

10. Vehicle sensor system (FSES_{A}) according to one of Claims 7 to 9, **characterized in that**
the communication unit (KE) is embodied in such a way that the second relative information items (RI2, RI2*) are received by the calibrated vehicle sensor system (FSES_{B}) by means of direct communication with the vehicle sensor system (FSES_{A}) or by means of indirect communication preferably via a control centre (LZ) which is assigned to the vehicle sensor systems (FSES_{A}, FSES_{B}, FSES) .

11. Vehicle sensor system (FSES_{A}) according to one of Claims 7 to 10, **characterized by**
a rail vehicle sensor system or road vehicle sensor system.

12. Vehicle sensor system (FSES_{A}) according to one of Claims 7 to 11, **characterized in that**
the sensor is a 3D sensor, a RADAR-based sensor, a camera sensor, a laser sensor or an ultrasonic sensor.

13. Vehicle sensor system (FSES_{A}) according to one of Claims 7 to 12, **characterized in that**
the sensor arrangements (SE_{A}, SE_{B}, SE) contain laser scanners and encoders for determining travel paths.

14. Computer programme product (CPP) **characterized by** a non-volatile readable memory (SP) in which processor-readable control programme commands of a programme module (PGM') which carries out a method for carrying out the calibration of a vehicle sensor system (FSES_{A}), in particular of an autonomous vehicle, according to one of Claims 1 to 6 are stored, and a processor (PZ) which is connected to the memory (SP) and executes the control programme commands of the programme module (PGM') for carrying out the method.

## Revendications

1. Procédé de réalisation de l'étalonnage d'un système de capteurs de véhicule (FSES_{A}), plus particulièrement d'un système autonome, dans lequel
a) au moins une caractéristique du système (SM_FSES_{A}, SM'_FSES_{A}) extraite, plus particulièrement pouvant être obtenue par la segmentation de caractéristiques naturelles du système de capteurs de véhicule (FSES_{A}) ou par l'ajout de caractéristiques artificielles spéciales aux caractéristiques naturelles du système de capteurs de véhicule (FSES_{A}), par exemple des marques réfléchissantes pour un scanner laser, peut être mesurée avec un dispositif de capteurs (SE_{A}) contenant au moins un capteur du système de capteurs de véhicule (FSES_{A}), qui est soit comparable soit différent d'autres dispositifs de capteurs (SE) d'autres systèmes de capteurs de véhicules (FSES) étalonnés, mais comparable en ce qui concerne la caractéristique de système (SM_FSES_{A}, SM'_FSES_{A}) extraite mesurable respective,
b) des paramètres de système extrinsèques (SP_{Ae}) et des paramètres de système intrinsèques (SP_{Ai}) par rapport au dispositif de capteurs (SE_{A}) peuvent être indiqués et
c) en fonction des paramètres du système (SP_{Ae}, SP_{Ai}) et de la caractéristique du système (SM_FSES_{A}, SM'_FSES_{A}), une pose de système 6D [T_{h_}FSES_{A}], [T_{h_}FSES_{A}]* peut être décrite et **caractérisée par** une transformation homogène [Tₕ], **caractérisé en ce que**
d) à l'aide d'un système de capteurs de véhicule (FSES_{B}) des autres systèmes de capteurs du véhicule (FSES) étalonnés, qui peut se trouver dans une portée (RW_SE_{A}) prédéterminée par le dispositif de capteurs (SE_{A}), plus particulièrement dans une portée prédéterminée par la visibilité, par rapport aux paramètres du système (SP_{Ae}, SP_{Ai}), au moins une première caractéristique de système (FSES_{A_}SM_{_}FSES_{B}, FSES_{A_}SM'_{_}FSES_{B}) extraite, plus particulièrement pouvant être obtenue par la segmentation de caractéristiques naturelles d'un système de capteurs de véhicule (FSES_{B}) ou par l'ajout de caractéristiques artificielles spéciales aux caractéristiques naturelles du système de capteurs de véhicule (FSES_{B}) étalonné, par exemple des marques réfléchissantes pour un scanner laser, est mesurée par le dispositif de capteurs (SE_{A}),
e) en fonction des paramètres du système (SP_{Ae}, SP_{Ai}) et de la première caractéristique du système (FSES_{A_}SM_{_}FSES_{B}, FSES_{A_}SM'_{_}FSES_{B}), une pose de système 6D [FSES_{A_}T_{h_}FSES_{B}], [FSES_{A_}T_{h_}FSES_{B}]* spécifiant le système de capteurs de véhicule (FSES_{B}) étalonné est décrite et **caractérisée par** la transformation homogène [Tₕ],
f) sur la base de la pose de système 6D [FSES_{A_}T_{h_}FSES_{B}], [FSES_{A_}T_{h_}FSES_{B}]* spécifiant le système de capteurs de véhicule (FSES_{B}) étalonné, sont générées des premières informations relatives (RI1, RI1*),
g) des deuxièmes informations relatives (RI2, RI2*), reçues par le système de capteurs de véhicule (FSES_{A}) étalonné, sont utilisées, qui peuvent être générées par le système de capteurs de véhicule (FSES_{B}) étalonné sur la base d'une pose de système 6D [FSES_{B_}T_{h_}FSES_{A}], [FSES_{B_}T_{h_}FSES_{A}]* spécifiant le système de capteurs de véhicule (FSES_{A}),
dans lequel, dans le système de capteurs de véhicule (FSES_{B}) étalonné, avec un dispositif de capteurs (SE) supplémentaire (SE_{B}) des autres dispositifs de capteurs (SE) et d'autres paramètres de système extrinsèques (SP_{Be}) et paramètres de système intrinsèques (SP_{Bi}), pouvant être indiqués par rapport au dispositif de capteurs supplémentaire (SE_{B}), au moins une deuxième caractéristique de système (FSES_{B_}SM_{_}FSES_{A}, FSES_{B_}SM'_{_}FSES_{A}) extraite, plus particulièrement pouvant être obtenue par la segmentation de caractéristiques naturelles du système de capteurs du véhicule (FSES_{A}) ou par l'ajout de caractéristiques artificielles spéciales aux caractéristiques naturelles du système de capteurs du véhicule (FSES_{A}), par exemple des marques réfléchissantes pour un scanner laser, peut être mesurée par le système de capteurs de véhicule (FSES_{A}) pouvant se trouver dans une autre portée (RW_{_}SE_{B}) prédéterminée par le dispositif de capteurs supplémentaire (SE_{B}), de préférence globalement identique à la portée (RW_{_}SE_{A}) et, en fonction des autres paramètres du système (SP_{Be}, SP_{Bi}) et de la deuxième caractéristique du système (FSES_{B_}SM_{_}FSES_{A}, FSES_{B_}SM'_{_}FSES_{A}), ladite pose de système 6D [FSES_{B_}T_{h_}FSES_{A}], [FSES_{B_}T_{h_}FSES_{A}]* peut être décrite et **caractérisée par** une transformation homogène [Tₕ] ,
h) les premières informations relatives (RI1, RI1*) sont comparées avec les deuxièmes informations relatives (RI2, RI2*) de façon à ce que, lorsque la pose de système 6D [FSES_{A_}T_{h_}FSES_{B}], [FSES_{A_}T_{h_}FSES_{B}]*, contenue dans les premières informations relatives (RI1, RI1*), spécifiant le système de capteurs du véhicule (FSES_{B}) étalonné, et la pose de système 6D [FSES_{B_}T_{h_}FSES_{A}], [FSES_{B_}T_{h_}FSES_{A}]*, contenue dans les deuxièmes informations relatives (RI2, RI2*), spécifiant le système de capteurs de véhicule (FSES_{A}), sont identiques, le système de capteurs du véhicule (FSES_{A}) soit étalonné, dans le cas contraire, grâce à la modification des paramètres du système (SP_{Ae}, SP_{Ai}) du système de capteurs du véhicule (FSES_{A}), de préférence suite à une procédure d'optimisation dans le système de capteurs du véhicule (FSES_{A}), des deuxièmes informations relatives (RI2*') ajustées sont utilisées, qui sont générées par le système de capteurs de véhicule (FSES_{B}) étalonné sur la base d'une pose de système 6D [FSES_{B_}T_{h_}FSES_{A}]*', également ajustée, spécifiant le système de capteurs de véhicule (FSES_{A}), et les deuxièmes informations relatives ajustées (RI2*') sont comparées, en tant que nouvelles deuxièmes informations relatives (RI2*), avec les premières informations relatives (RI1*) pour une vérification d'identité de la pose de système 6D.

2. Procédé selon la revendication 1, **caractérisé en ce que** l'identité des poses de système 6D [FSES_{A_}FSES_{B}], et [FSES_{B}_T_{h_}FSES_{A}] décrites et **caractérisées par** la transformation homogène [Tₕ] est constatée au moyen d'une multiplication de matrices de transformation selon la règle :
[FSES_{A_}T_{h_}FSES_{B}] x [FSES_{B_}T_{h_}FSES_{A}] = [E], « [E] » étant une matrice unitaire et
la non-identité des poses de système 6D [FSES_{A_}T_{h_}FSES_{B}]* et [FSES_{B_}T_{h_}FSES_{A}]* décrites et **caractérisées par** la transformation homogène [Tₕ] est constatée au moyen d'une multiplication de matrices de transformation selon la règle :
[FSES_{A_}T_{h_}FSES_{B}]* x [FSES_{B_}T_{h_}FSES_{A}]* ≠ [E], « [E] » étant une matrice unitaire.

3. Procédé selon la revendication 1 ou 2, **caractérisé en ce que**
les deuxièmes informations relatives (RI2, RI2*, RI2*') sont transmises par le système de capteurs du véhicule (FSES_{B}) étalonné pour une utilisation grâce à une communication directe avec le système de capteurs du véhicule (FSES_{A}) ou grâce à une communication indirecte, de préférence par l'intermédiaire d'un poste de commande (LZ) correspondant aux systèmes de capteurs du véhicule (FSES_{A}, FSES_{B}, FSES), avec le système de capteurs du véhicule (FSES_{A}).

4. Procédé selon l'une des revendications 1 à 3, **caractérisé en ce que**
les systèmes de capteurs du véhicule (FSES_{A}, FSES_{B}, FSES) sont des systèmes de capteurs de véhicules ferroviaires ou des systèmes de capteurs de véhicules routiers.

5. Procédé selon l'une des revendications 1 à 4, **caractérisé en ce que**
le capteur est un capteur 3D, un capteur basé sur la technologie RADAR, un capteur de type caméra, un capteur de type laser ou un capteur à ultrasons.

6. Procédé selon l'une des revendications 1 à 5, **caractérisé en ce que**
les dispositifs de capteurs (SE_{A}, SE_{B}, SE) contiennent des scanners laser et des codeurs pour la détermination d'un trajet.

7. Système de capteurs de véhicule (FSES_{A}), plus particulièrement système autonome, avec
a1) un dispositif de capteurs (SE_{A}) contenant au moins un capteur, qui mesure au moins une caractéristique de système (SM_{_}FSES_{A}) extraite, plus particulièrement pouvant être obtenue par la segmentation de caractéristiques naturelles du système de capteurs du véhicule (FSES_{A}) pour l'ajout de caractéristiques artificielles spéciales aux caractéristiques naturelles du système de capteurs du véhicule (FSES_{A}), par exemple des marques réfléchissantes pour des scanners laser et qui est comparable à d'autres dispositifs de capteurs (SE) d'autres systèmes de capteurs du véhicule (FSES) étalonnés, soit comparables soit différents de ceux-ci, mais comparables respectivement en ce qui concerne la caractéristique de système (SM_FSES_{A}, SM_{_}FSES_{A}') extraite mesurable et
a2) une unité de commande et d'analyse (SAE) qui est reliée avec le dispositif de capteurs (SE_{A}) et est réalisée avec celui-ci de façon à ce que
a12-1) par rapport au dispositif de capteurs (SE_{A}), des paramètres de système extrinsèques (SP_{Ae}) et des paramètres de système intrinsèques (SP_{Ai}) peuvent être indiqués et
a12-2) en fonction des paramètres de système (SP_{Ae}, SP_{Ai}) et de la caractéristique du système (SM_FSES_{A}, SM'_FSES_{A}), une pose de système 6D [Tₕ_FSES_{A}], [T_{H}_FSES_{A}]* peut être décrite et **caractérisée par** une transformation homogène [Tₕ], **caractérisé par**
b) une unité de communication (KE) et une unité de comparaison (VE), qui sont reliées avec l'unité de commande et d'analyse (SAE) et forment avec celle-ci une unité fonctionnelle commune (FTE) qui est conçue de façon à ce que
b1) le dispositif de capteurs (SE_{A}), à l'aide d'un système de capteurs de véhicule (FSES_{B}) étalonné des autres systèmes de capteurs de véhicule (FSES), qui peut se trouver dans une portée (RW_SE_{A}) prédéterminée par le dispositif de capteurs (SE_{A}), plus particulièrement dans une portée prédéterminée par la visibilité, par rapport aux paramètres du système (SP_{Ae}, SP_{Ai}), mesure au moins une première caractéristique de système (FSES_{A}_SM_FSES_{B}, FSES_{A}_SM'_FSES_{B}) extraite, plus particulièrement pouvant être obtenue par la segmentation de caractéristiques naturelles du système de capteurs du véhicule (FSES_{B}) étalonné ou par l'ajout de caractéristiques artificielles spéciales aux caractéristiques naturelles du système de capteurs du véhicule (FSES_{B}) étalonné, par exemple des marques réfléchissantes pour des scanners laser,
b2) l'unité de commande et d'analyse (SAE) décrit et caractérise, en fonction des paramètres du système (SP_{Ae}, SP_{Ai}) et de la première caractéristique de système (FSES_{A}_SM_FSES_{B}, FSES_{A}_SM'_FSES_{B}), grâce à la transformation homogène [Tₕ], une pose de système 6D [FSES_{A}_Tₕ_FSES_{B}], [FSES_{A}_Tₕ_FSES_{B}]* spécifiant le système de capteurs du véhicule (FSES_{B}) étalonné,
b3) l'unité de commande et d'analyse (SAE) génère, sur la base de la pose de système 6D [FSES_{A}_Tₕ_FSES_{B}], [FSES_{A}_Tₕ_FSES_{B}]* spécifiant le système de capteurs du véhicule (FSES_{B}) étalonné, des premières informations relatives (RI1, RI1*),
b4) l'unité de communication (KE) reçoit des deuxièmes informations relatives (RI2, RI2*) qui peuvent être générées par le système de capteurs du véhicule (FSES_{B}) étalonné sur la base d'une pose de système 6D [FSES_{B}_Tₕ_FSES_{A}], [FSES_{B}_Tₕ_FSES_{A}]* spécifiant le système de capteurs du véhicule (FSES_{A}), dans lequel, dans le système de capteurs du véhicule (FSES_{B}), avec un dispositif de capteurs supplémentaire (SE_{B}) des autres dispositifs de capteurs (SE) et d'autres paramètres de système extrinsèques (SP_{Be}) et paramètres de système intrinsèques (SP_{Bi}), pouvant être indiqués par rapport au dispositif de capteurs supplémentaire (SE_{B}), au moins une deuxième caractéristique de système (FSES_{B}_SM_FSES_{A}, FSES_{B}_SM'_FSES_{A}) extraite, plus particulièrement pouvant être obtenue par la segmentation de caractéristiques naturelles du système de capteurs du véhicule (FSES_{A}) ou par l'ajout de caractéristiques artificielles spéciales aux caractéristiques naturelles du système de capteurs du véhicule (FSES_{A}), par exemple des marques réfléchissantes pour un scanner laser, peut être mesurée par le système de capteurs de véhicule (FSES_{A}) pouvant se trouver dans une autre portée (RW_SE_{B}) prédéterminée par le dispositif de capteurs supplémentaire (SE_{B}), de préférence globalement identique à la portée (RW_SE_{A}) et, en fonction des autres paramètres du système (SP_{Be}, SP_{Bi}) et de la deuxième caractéristique du système (FSES_{B}_SM_FSES_{A}, FSES_{B}_SM'_FSES_{A}), ladite pose de système 6D [FSES_{B}_Tₕ_FSES_{A}], [FSES_{B}_Tₕ_FSES_{A}]* peut être décrite et **caractérisée par** une transformation homogène [Tₕ],
b5) l'unité de comparaison (VE) compare les premières informations relatives (RI1, RI1*) avec les deuxièmes informations relatives (RI2, RI2*) de façon à ce que, lorsque la pose de système 6D [FSES_{A}_Tₕ_FSES_{B}], [FSES_{A}_Tₕ_FSES_{B}]*, contenue dans les premières informations relatives (RI1, RI1*), spécifiant le système de capteurs du véhicule (FSES_{B}) étalonné et la pose de système 6D [FSES_{B}_Tₕ_FSES_{A}], [FSES_{B}_Tₕ_FSES_{A}]*, contenue dans les deuxièmes informations relatives (RI2, RI2*), spécifiant le système de capteurs de véhicule (FSES_{A}), sont identiques, le système de capteurs du véhicule (FSES_{A}) est étalonné, dans le cas contraire, grâce à la modification des paramètres du système (SP_{Ae}, SP_{Ai}) du système de capteurs du véhicule (FSES_{A}), de préférence suite à une procédure d'optimisation dans le système de capteurs du véhicule (FSES_{A}), des deuxièmes informations relatives (RI2*') ajustées sont utilisées, qui sont générées par le système de capteurs de véhicule (FSES_{B}) étalonné sur la base d'une pose de système 6D [FSES_{B}_Tₕ_FSES_{A}]*' également ajustée, spécifiant le système de capteurs de véhicule (FSES_{A}), et les deuxièmes informations relatives ajustées (RI2*') sont comparées, en tant que nouvelles deuxièmes informations relatives (RI2*), avec les premières informations relatives (RI1*) pour une vérification d'identité de la pose de système 6D.

8. Système de capteurs de véhicule (FSES_{A}) selon la revendication 7, **caractérisé en ce que**
l'unité de comparaison (VE) et l'unité de commande et d'analyse (SAE) sont conçues de façon à ce que
l'identité des poses de système 6D [FSES_{A}_Tₕ_FSES_{B}] et [FSES_{B}_Tₕ_FSES_{A}] décrites et **caractérisées par** la transformation homogène [Tₕ] est constatée au moyen d'une multiplication de matrices de transformation selon la règle :
[FSES_{A}_Tₕ_FSES_{B}] x [FSES_{B}_Tₕ_FSES_{A}] = [E], « [E] » étant une matrice unitaire et
la non-identité des poses de système 6D [FSES_{A}_Tₕ_FSES_{B}]* et [FSES_{B}_Tₕ_FSES_{A}]* décrites et **caractérisées par** la transformation homogène [Tₕ] est constatée au moyen d'une multiplication de matrices de transformation selon la règle :
[FSES_{A}_Tₕ_FSES_{B}]* x [FSES_{B}_Tₕ_FSES_{A}]* ≠ [E], « [E] » étant une matrice unitaire.

9. Système de capteurs de véhicule (FSES_{A}) selon la revendication 7 ou 8, **caractérisé en ce que**
une autre unité fonctionnelle, constituée de l'unité de comparaison (VE) et de l'unité de commande et d'analyse (SAE), est conçue comme un produit de programme informatique (CPP) pour la réalisation de la transformation homogène et de la comparaison d'identité, qui contient une mémoire non volatile lisible (SP), dans laquelle sont enregistrées des instructions de programme de commande, lisibles par un processeur, d'un module de programme (PGM) effectuant la transformation homogène et la comparaison d'identité, et un processeur (PZ) relié avec la mémoire (SP), qui exécute les instructions du programme de commande du module de programme (PGM) afin d'effectuer la transformation homogène et la comparaison d'identité.

10. Système de capteurs de véhicule (FSES_{A}) selon l'une des revendications 7 à 9, **caractérisé en ce que**
l'unité de communication (KE) est conçue de façon à ce que les deuxièmes informations relatives (RI2, RI2*) soient reçues par le système de capteurs de véhicule (FSES_{B}) grâce à une communication directe avec le système de capteurs de véhicule (FSES_{A}) ou grâce à une communication indirecte, de préférence par l'intermédiaire d'un poste de commande (LZ) correspondant au système de capteurs du véhicule (FSES_{A}, FSES_{B}, FSES), avec le système de capteurs de véhicule (FSES_{A}).

11. Système de capteurs de véhicule (FSES_{A}) selon l'une des revendications 7 à 10, **caractérisé par**
un système de capteurs de véhicule ferroviaire ou un système de capteurs de véhicule routier.

12. Système de capteurs de véhicule (FSES_{A}) selon l'une des revendications 7 à 11, **caractérisé en ce que**
le capteur est un capteur 3D, un capteur basé sur la technologie RADAR, un capteur de type caméra, un capteur de type laser ou un capteur à ultrasons.

13. Système de capteurs de véhicule (FSES_{A}) selon l'une des revendications 7 à 12, **caractérisé en ce que**
les dispositifs de capteurs (SE_{A}, SE_{B}, SE) contiennent des scanners laser et des codeurs pour la détermination d'un trajet.

14. Produit de programme informatique (CPP) **caractérisé par** une mémoire non volatile lisible (SP), dans laquelle sont enregistrées des instructions de programme de commande, lisibles par un processeur, d'un module de programme (PGM') exécutant un procédé de réalisation de l'étalonnage d'un système de capteurs de véhicule (FSES_{A}), plus particulièrement d'un véhicule autonome, selon l'une des revendications 1 à 6 et un processeur (PZ) relié avec la mémoire (SP), qui exécute les instructions du programme de commande du module de programme (PGM') afin d'exécuter le procédé.
